# EUROPEAN PATENT SPECIFICATION

(11) **EP 1 624 642 B1**
(45) Date of publication and mention of the grant of the patent: **07.03.2012**
(21) Application number: 05024660.2
(22) Date of filing: 16.01.2004
(51) Int. Cl.: H04L 29/06, G06F 17/30, G06F 3/12, H04N 1/00, H04L 29/08, H04L 12/24

(54) **Apparatus, method and system for providing information in accordance with one of a plurality of protocols**
Vorrichtung, Verfahren und System zur Mitteilung von Informationen in Übereinstimmung mit einem von einer Mehrzahl von Protokollen
Dispositif, méthode et système pour la fourniture d'informations suivant un protocole parmi plusieurs

(30) Priority: 16.01.2003 JP 2003008801
(43) Date of publication of application: 08.02.2006
(62) Divisional of application: 04250227.8
(73) Proprietor: Ricoh Company, Ltd., Tokyo 143-8555 (JP)
(72) Inventor: Kobayashi, Sayaka, Tokyo (JP)
(74) Representative: White, Duncan Rohan

(56) References cited:
- WO-A-01/47207
- WO-A-02/23857
- GB-A- 2 371 129
- US-A- 5 961 594
- US-B1- 6 178 004
- US-B1- 6 349 304
- US-B1- 6 369 909

## Description

### BACKGROUND OF THE INVENTION

### 1. Field of the Invention

The present invention generally relates to an apparatus, a method and a system of providing information, and more particularly to an apparatus, a method and a system of efficiently providing information to a terminal connected thereto via a network.

### 2. Description of the Related Art

Recent advances in technologies are remarkable, and various types of information devices are widely used in conditions where these information devices are connected to networks, for example, in Web systems to which a large number of clients are connected. In these conditions, such a connected information device can be remotely controlled from a terminal such as a personal computer (PC). Also, Web server function built-in devices are widely used. In this devices, for example, input paper tray information (firmware version, job history, device configuration, job management information, stored document management information and so on) of an image forming apparatus such as a copier, a printer and a facsimile can be viewed on a Web browser of PC via a network.

In order to properly display data transmitted from a Web server on a Web browser of PC, the Web server has to generate the data in a data format that the Web browser can handle, for example, in HTML (HyperText Markup Language) as appreciated by those skilled in the art.

Accordingly, if PC expects the Web server to transmit information via an e-mail, the Web server has to include an additional application, that is, an application for generating data in a data format corresponding to the e-mail.

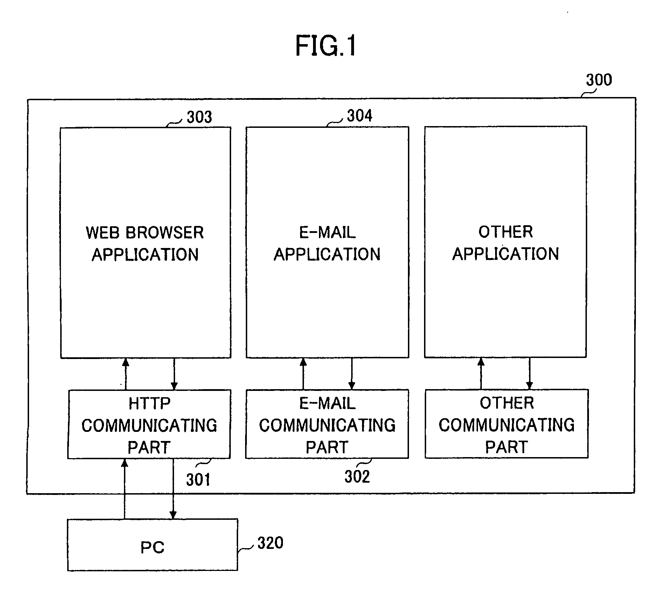

FIG. 1 shows an exemplary functional structure of a conventional Web server that can handle a plurality of protocols.

Referring to FIG. 1, a Web server 300 includes an HTTP (HyperText Transfer Protocol) communicating part 301, an e-mail communicating part 302, a Web browser application 303 and an e-mail application 304.

The HTTP communicating part 301 and the e-mail communicating part 302 are daemon programs, and each communicating part communicates to PC 320 in a certain protocol. Specifically, the HTTP communicating part 301 may communicate to PC 320 in HTTP, and the e-mail communicating part 302 may communicate to PC 320 via an e-mail.

The Web browser application 303 is an application to generate information to be provided to PC 320 as a web page. On the other hand, the e-mail application 304 is an application to generate information to be provided to PC 320 in a data format, such as a text format, in which the information can be transmitted via an e-mail.

Conventionally, if a web server can handle a plurality of protocols, a plurality of applications corresponding to individual protocols or individual data formats have to be mounted in the Web server.

In this configuration, however, a conventional Web server has to include a plurality of similar applications. Specifically, it seems that the Web browser application 303 and the e-mail application 304 generate and obtain information to be provided to PC 320 in a similar way. These two applications differ from each other just in that data are generated depending on respective protocols or data formats.

Therefore, such conventional implementation not only decreases development efficiency but also increases loads on memory capacity of the Web server.

### SUMMARY OF THE INVENTION

It is a general object of the present invention to provide an information providing apparatus, an information providing method, an information providing method, an information providing system, an information providing program and a recording medium for storing the information providing program in which one or more of the above-mentioned problems are eliminated.

A more specific object of the present invention is to provide an information providing apparatus, an information providing method, an information providing method, an information providing system, an information providing program and a recording medium for storing the information providing program that can efficiently provide information corresponding to a plurality of protocols for clients.

US-A-5961594 discloses a system for remotely accessing communication network nodes and for monitoring each type of resource within such nodes. The system comprises a web browser as a user interface, a web server for generating and transmitting commands to the destination node and a dedicated multiprotocol agent in each node communicating with the web server by means of an appropriate protocol.

The invention provides an information providing apparatus as claimed in claim 1, an information providing method as claimed in claim 7, an information providing system as claimed in claim 8 and a carrier medium as claimed in claim 9.

The invention will now be described in more detail and by way of example only, with reference to the accompanying drawings.

### BRIEF DESCRIPTION OF THE DRAWINGS

FIG. 1 shows an exemplary functional structure of a conventional Web server that can handle a plurality of protocols;
FIG. 2 shows an exemplary structure of an image processing system according to one embodiment of the present invention;
FIG. 3 shows an exemplary functional structure of an image forming apparatus according to one embodiment of the present invention;
FIG. 4 shows an exemplary architecture of an information providing application according to one embodiment of the present invention;
FIG. 5 shows exemplary contents of a corresponding page generating module table according to one embodiment of the present invention;
FIG. 6 shows an exemplary structure of a format converting module according to one embodiment of the present invention;
FIG. 7 shows exemplary contents of a corresponding XSL table according to one embodiment of the present invention;
FIG. 8 shows an exemplary functional structure of an information providing application according to a first embodiment of the present invention;
FIG. 9 is a sequence diagram to explain an operational procedure of an image forming apparatus according to the first embodiment in a case where the image forming apparatus communicates to a terminal in accordance with HTTP;
FIG. 10 shows exemplary contents of a corresponding page generating module table according to the first embodiment;
FIG. 11 shows exemplary displayed contents of XML input paper tray information data according to the first embodiment;
FIG. 12 shows exemplary contents of a corresponding XSL table according to the first embodiment;
FIG. 13 shows exemplary displayed contents of an input paper tray information page according to the first embodiment;
FIG. 14 is a sequence diagram to explain an operational procedure of an image forming apparatus according to the first embodiment in a case where the image forming apparatus communicates to a terminal via an e-mail;
FIG. 15 shows exemplary contents of XML output paper tray information data according to the first embodiment;
FIG. 16 shows exemplary displayed contents of an output paper tray information page according to the first embodiment;
FIG. 17 shows exemplary contents of XML toner information data according to the first embodiment;
FIG. 18 shows exemplary displayed contents of a toner information page according to the first embodiment;
FIG. 19 shows an exemplary functional structure of an information providing application according to a second embodiment;
FIG. 20 is a sequence diagram to explain an operational procedure of an image forming apparatus according to the second embodiment in a case where the image forming apparatus communicates to a terminal in accordance with HTTP;
FIG. 21 shows exemplary contents of a corresponding page generating module table according to the second embodiment;
FIG. 22 shows exemplary XML function information data according to the second embodiment;
FIG. 23 shows exemplary contents of a corresponding XSL table according to the second embodiment;
FIG. 24 shows exemplary displayed contents of a function information page according to the second embodiment;
FIG. 25 is a sequence diagram to explain an operational procedure of an image forming apparatus according to the second embodiment in a case where the image forming apparatus communicates to a terminal via an e-mail;
FIG. 26 shows exemplary contents of XML system information data according to the second embodiment;
FIG. 27 shows exemplary displayed contents of a system information page according to the second embodiment;
FIG. 28 shows exemplary contents of XML emulation information data according to the second embodiment;
FIG. 29 shows exemplary displayed contents of an emulation information page according to the second embodiment;
FIG. 30 shows an exemplary functional structure of an information providing application according to a third embodiment;
FIG. 31 is a sequence diagram to explain an operational procedure of an image forming apparatus according to the third embodiment in a case where the image forming apparatus communicates to a terminal in accordance with HTTP;
FIG. 32 shows exemplary contents of a corresponding page generating module table according to the third embodiment;
FIG. 33 shows exemplary XML network information data according to the third embodiment;
FIG. 34 shows exemplary contents of a corresponding XSL table according to the third embodiment;
FIG. 35 shows exemplary displayed contents of a network information page according to the third embodiment;
FIG. 36 is a sequence diagram of an exemplary operation of an image forming apparatus according to the third embodiment to set network information via a Web browser;
FIG. 37 shows exemplary XML setting result information data according to the third embodiment;
FIG. 38 shows exemplary displayed contents of a setting result information page according to the third embodiment;
FIG. 39 is a sequence diagram to explain an operational procedure of an image forming apparatus according to the third embodiment in a case where an image forming apparatus communicates to a terminal via an e-mail; and
FIG. 40 is a sequence diagram of an exemplary operation of an image forming apparatus according to the third embodiment to set a network via an e-mail.

### DETAILED DESCRIPTION OF THE PREFERRED EMBODIMENTS

In the following, embodiments of the present invention will be described with reference to the accompanying drawings.

An embodiment of an image processing system according to the present invention is described.

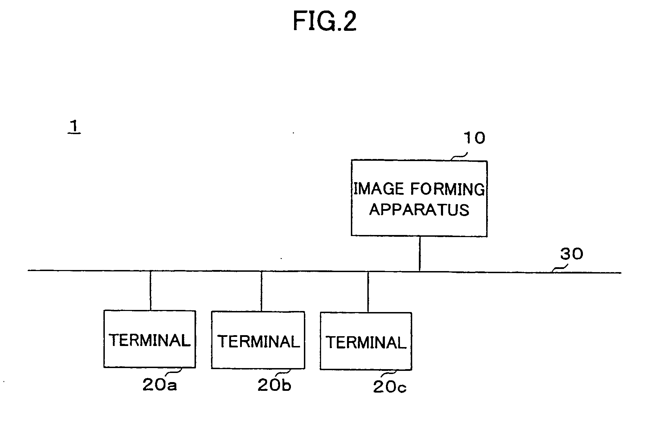

FIG. 2 shows an exemplary structure of an image processing system according to one embodiment of the present invention.

Referring to FIG. 2, an image processing system 1 includes an image forming apparatus 10 and terminals 20a, 20b and 20c (hereinafter which are collectively referred to as terminal 20), and these components are connected to each other via a network 30 such as LAN (Local Area Network), an intranet or the Internet.

In accordance with requests from the terminal 20, the image forming apparatus 10 performs various processes such as a printing process or a FAX transmission process on document data. When the image forming apparatus 10 receives from the terminal 20 a request to transmit information regarding the image forming apparatus 10 to the terminal 20, the image forming apparatus 10 sends to the terminal 20 the information in a requested data format. For example, when a user of the terminal 20 requests information regarding the image forming apparatus 10 via a Web browser, the image forming apparatus 10 sends HTML (HyperText Markup Language) data including the requested information to the terminal 20. Alternatively, when a user of the terminal 20 requests the information regarding the image forming apparatus 10 via an e-mail, the image forming apparatus 10 correspondingly sends text data including the requested information via an e-mail. It is noted that the term "data formats" in this embodiment contains not only data types such as a text type, BITMAP type and JPEG type but also data contents and document styles such as displayed document layouts. Thus, even if some data items are the same HTML data, it is considered that data formats of these data items differ from each other as long as description contents thereof differ from each other.

An exemplary functional structure of the image forming apparatus 10 is described.

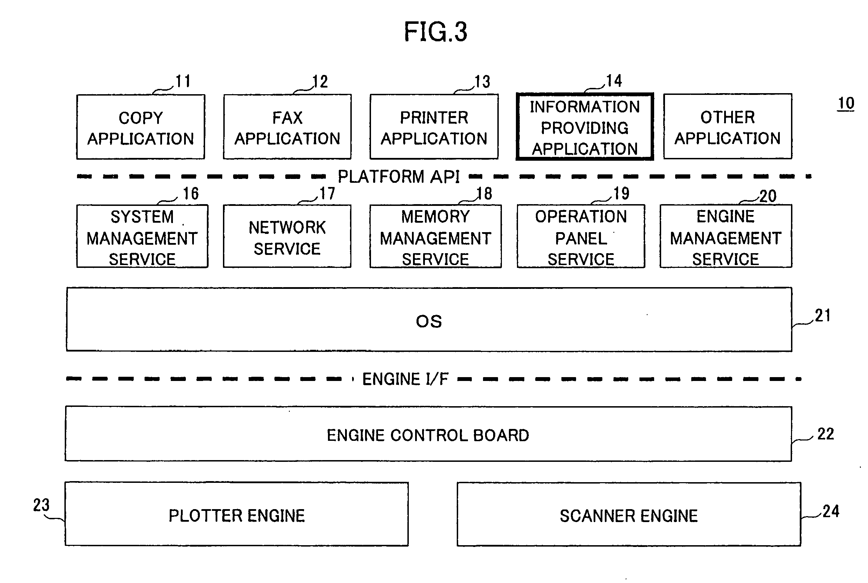

FIG. 3 shows an exemplary functional structure of the image forming apparatus 10 according to one embodiment of the present invention.

Referring to FIG. 3, the image forming apparatus 10 includes hardware resources for image processing such as a plotter engine 23 and a scanner engine 24, an engine control board 22, an operating system (OS) 21, a system management service 16, a network service 17, a memory management service 18, an operation panel management service 19, an engine management service 20, and various applications such as a copy application 11, a FAX application 12, a printer application 13 and an information providing application 14.

The engine control board 22 controls individual functions of the image forming apparatus 10 such as the plotter engine 23 and the scanner engine 24, and provides functions of the engine control board 22 to OS 21 and other components via an engine interface (I/F).

OS 21 is configured from an operating system such as UNIX (Registered Trademark), and executes various mounted software items, such as the copy application 11 and the FAX application 12, in parallel.

The system management service 16, the network service 17, the memory management service 18, the operation panel management service 19 and the engine management service 20 provide respective functions to the upper applications such as the copy application 11 via API (Application Programming Interface). Specifically, the system management service 16 provides functions related to system management. The network service 17 provides functions related to network communication. The memory management service 18 provides functions related to memory management. The operation panel management service 19 provides functions related to an operation panel of the image forming apparatus 10. The engine management service 20 provides functions to control the plotter engine 23 and the scanner engine 24 via the engine control board 22.

The copy application 11 is an application for copying. The FAX application 12 is an application for FAX. The printer application 13 is an application for a printer having PDL (Page Description Language) and PS (PostScript). The information providing application 14 is an application implemented by an information providing program including features according to the present invention. For requests from the terminal 20, the information providing application 14 generates data including requested information in a requested data format.

An embodiment of the information providing application 14 is described in detail.

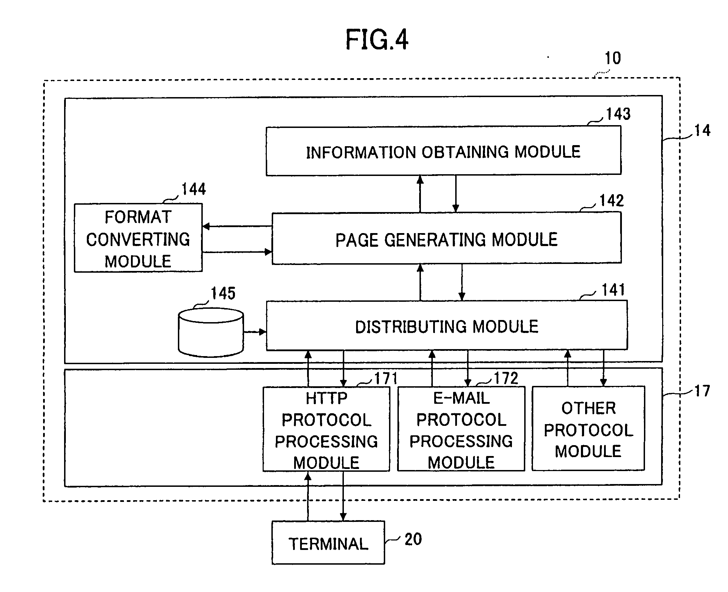

FIG. 4 shows an exemplary architecture of the information providing application 14 according to one embodiment of the present invention. FIG. 4 is an detailed illustration of the network service 17 and the information providing application 14 in FIG. 3. For clarification of features of the image forming apparatus 10 according to this embodiment, other components are omitted in the illustration.

Referring to FIG. 4, the network service 17 includes an HTTP protocol processing module 171 and an e-mail protocol processing module 172. The HTTP protocol processing module 171 is a daemon program for HTTP communication to the terminal 20. Specifically, when the terminal 20 issues a request to transmit information to the image forming apparatus 10 in HTTP, the HTTP protocol processing module 171 receives this information transmission HTTP request. In response to such an information transmission HTTP request from the terminal 20, the HTTP protocol processing module 171 delivers to a distributing module 141, which is to be described in detail below, URL (Uniform Resource Locator) contained in the received HTTP request as request identification information to identify the request from the terminal 20. Finally, the HTTP protocol processing module 171 sends a Web page having the requested information as a response to the terminal 20.

Similarly, the e-mail protocol processing module 172 is a daemon program for e-mail communication to the terminal 20 in accordance with some protocols such as POP3 and SMTP. Specifically, the e-mail protocol processing module 172 receives an information transmission request from the terminal via an e-mail. In response to receipt of this information transmission e-mail request from the terminal 20, the e-mail protocol processing module 172 delivers to the distributing module 141 the subject field of the e-mail or a character string designated in the body of the e-mail as the request identification information. Finally, the e-mail protocol processing module 172 sends to the terminal 20 an e-mail including the requested information as a response.

In this embodiment, the network service 17 may have other protocol processing modules for processing other protocols such as telnet. Hereinafter, the term "protocol processing module" is be used to collectively refer to the HTTP protocol processing module 171 and the e-mail protocol processing module 172.

On the other hand, the information providing application 14 includes the above-mentioned distributing module 141, a page generating module 142, an information obtaining module 143, a format converting module 144 and a corresponding page generating module table 145. In FIG. 4, the page generating module 142 is illustrated as a single component. In fact, however, a plurality of page generating modules 142 are provided depending on types of information transmitted to the terminal 20 or types of request identification information.

The distributing module 141 selectively calls the page generating module 142 based on request identification information received from the protocol processing module.

The corresponding page generating module table 145 is a correspondence table between request identification information items and the individual page generating modules 142. The distributing module 141 determines one of the page generating modules 142 corresponding to given request identification information with reference to the corresponding page generating module table 145.

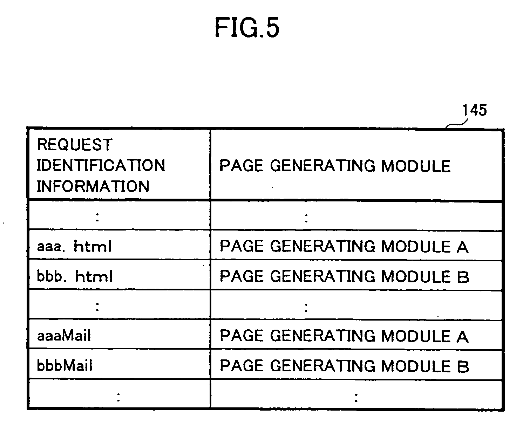

FIG. 5 shows exemplary contents of the corresponding page generating module table 145 according to one embodiment of the present invention.

Referring to FIG. 5, a correspondence between request identification information items and the page generating modules 142 is maintained in the corresponding page generating module table 145. The corresponding page generating module table 145 includes two data items: "request identification information- and "page generating module". In the corresponding page generating module table 145 illustrated in FIG. 5, if given request identification information is "aaa.html", the distributing module 141 calls the corresponding page generating module A.

Then, the distributing module 141 delivers data supplied from the called page generating module 142 and data including information requested by the terminal 20 to the protocol processing module that called the distributing module 141. In turn, the protocol processing module sends the data to the terminal 20.

If the distributing module 141 exclusively undertakes the selective calling of the page generating modules 142 as mentioned above, each protocol processing module does not have to include means for selectively calling the page generating modules 142. In addition, the correspondence between the request identification information items and the page generating modules 142 is managed in the corresponding page generating module table 145 separately from program logic. Thus, when a page generating module 142 is added or removed in/from the corresponding page generating module table 145, only the corresponding page generating module table 145 has to be changed.

The page generating module 142 calls the information obtaining module 143 and other components to obtain an information portion regarding the image forming apparatus 10. For example, this information portion may be one page of a Web page if the Web page is transmitted. Such information obtained by the page generating module 142 depends on the data type of a program language implementing the page generating module 142. For example, if the page generating module 142 is implemented in C language, the obtained information is configured from "int" type data, "char" type data and so on. Hereinafter, program language dependant information is referred to as "language dependant data".

Furthermore, in order to convert the data format of the language dependant data into another data format corresponding to a request from the terminal 20, the page generating module 142 requests the format converting module 144, which is to be described in detail below, to execute such data conversion. For example, if an HTTP request is sent from the terminal 20, the data format corresponding to the request may be an HTML Web page. On the other hand, if a request from the terminal 20 is provided through an e-mail, the data format corresponding to the request may be text data.

In response to receipt of conversion resultant data from the format converting module 144, the page generating module 142 supplies the data to the distributing module 141. As mentioned above, a plurality of page generating modules 142 are provided depending on the number of information types.

The information obtaining module 143 is configured as a library including a plurality of functions to provide various information items of the image forming apparatus 10 to the upper applications. In this embodiment, the information obtaining module 143 is called in common regardless of types of communication protocols to the terminal 20. Thus, if a plurality of functions have to be called to obtain an information portion to be transmitted to the user, the page generating module 142 calls the functions from the information obtaining module 143. In FIG. 5, the information obtaining module 143 is illustrated as a single component. However, a plurality of information obtaining modules 143 are provided depending on individual functions thereof.

The format converting module 144 converts the data format of language dependant data requested by the page generating module 142 into another data format corresponding to the request from the terminal 20. In this embodiment, the format converting module 144 is called in common regardless of types of communication protocols to the terminal 20 and individual page generating modules 142. Thus, only a single format converting module 144 has to be provided in the image forming apparatus 10. As a result, it is possible to decrease the number of fabrication steps for the image forming apparatus 10 and save required resources such as memory capacity of the image forming apparatus 10.

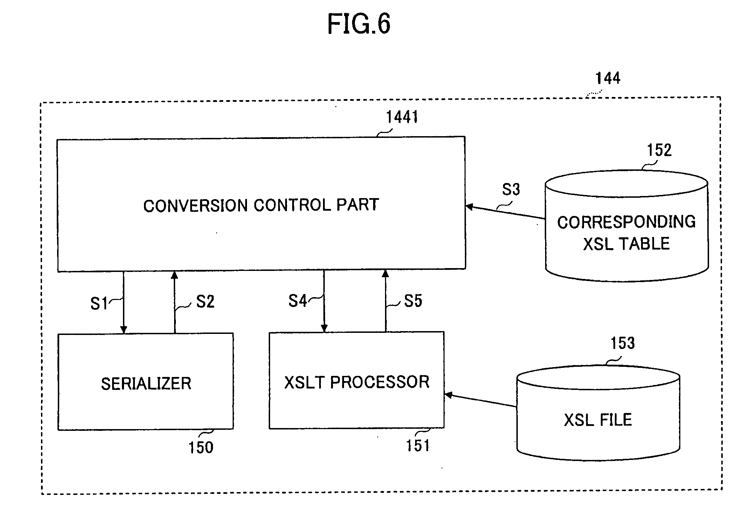

FIG. 6 shows an exemplary structure of the format converting module 144 according to one embodiment of the present invention.

Referring to FIG. 6, the format converting module 144 includes a conversion control part 1441, a serializer 150, an XSLT (extensible Stylesheet Language Transformations) processor 151, and a corresponding XSL table 152.

The conversion control part 1441 controls process flow for data format conversion of a language dependant data received from the page generating module 142 into another data format corresponding to a request from the terminal 20.

The serializer 150 converts language dependant data into XML (extensible Markup Language) data. The XSLT processor 151 converts the data format of XML data into a data format defined in an XSL file 153 designated by the conversion control part 1441.

The corresponding XSL table 152 is used to maintain a correspondence between request identification information items and XSL files 153.

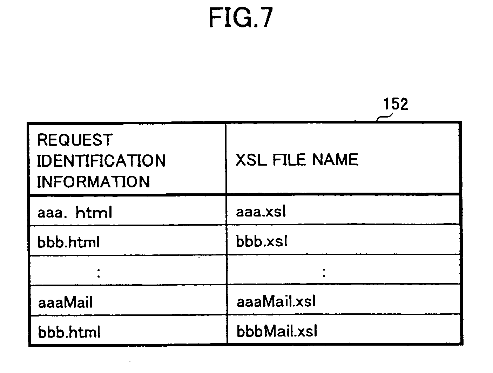

FIG. 7 shows exemplary contents of the corresponding XSL table according to one embodiment of the present invention;

Referring to FIG. 7, request identification information items and the corresponding XSL files 153 are maintained in the corresponding XSL table 152. As shown in FIG. 7, the corresponding XSL table 152 includes two data items: "request identification information" and "XSL file name".

In this embodiment, the conversion control part 1441 calls the serializer 150 by using language dependant data as input information thereto (S1 of FIG. 6). The serializer 150 converts the data format of the language dependant data into first DOM (Document Object Model) format and then XML format. After conversion, the serializer 150 supplies XML formatted information, which is referred to as "XML information data" hereinafter, to the conversion control part 1441 (S2). In another embodiment, the data format of the language dependant data may be first converted into not DOM but SAX (Simple API for XML).

After obtaining the XML information data, the conversion control part 1441 identifies the XSL file name corresponding to a given request identification information item with reference to the corresponding XSL table 152 (S3). In the corresponding XSL table 152 illustrated in FIG. 7, for example, if the request identification information item is "aaa.html", the XSL file "aaa.xsl" is identified corresponding to the request identification information item. Then, the conversion control part 1441 supplies the XSL file name "aaa.xsl" obtained from the corresponding XSL table 152 and the XML information data to the XSLT processor 151, and then requests the XSLT processor 151 to convert the XML information data (S4). The XSLT processor 151 XSLT-converts the XML information data in accordance with definition (transformation rule) of the XSL file 153, and supplies conversion resultant data (hereinafter which is referred to as "request format information data") to the conversion control part 1441.

For example, if a definition for generating HTML data is provided in the XSL file 153 corresponding to the request identification information item, the request format information data is generated as HTML data.

As mentioned above, the correspondence between request identification information items and converted data formats is managed in the corresponding XSL table 152 separately from program logic. Thus, it is possible to easily maintain the corresponding XSL table 152 such as modification of XSL files for conversion. In addition, the data format of request format information data can be defined in the XSL file 153 independently of program logic. Thus, it is possible to easily change the data format of request format information data by modifying the XSL file 153.

As mentioned above, the format converting module 144 can convert language dependant information into request format information data.

A first embodiment of the present invention is described in detail below.

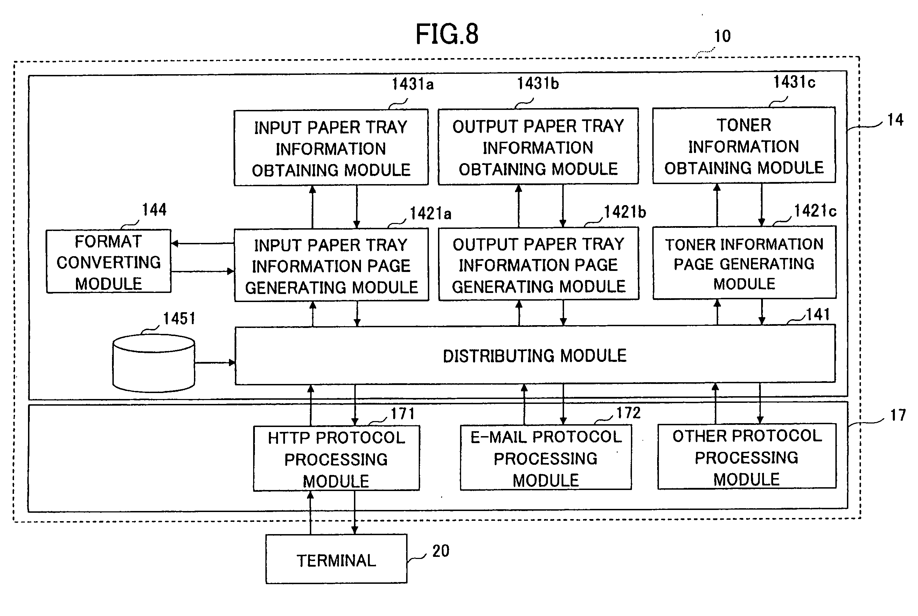

FIG. 8 shows an exemplary functional structure of an information providing application according to the first embodiment of the present invention. In FIG. 8, the same components as those in FIG. 4 are referred to as the same reference numerals and the description thereof is omitted.

In this embodiment, the image forming apparatus 10 provides dynamic information regarding the image forming apparatus 10 to the terminal 20. Here, the term "dynamic information" means information items that can be dynamically changed depending on operational statuses of the image forming apparatus 10. In other words, the dynamic information means information items contents of which can be changed whenever the terminal 20 accesses the image forming apparatus 10. For example, such dynamic information includes information items such as input paper tray conditions, output paper tray conditions and toner conditions of the image forming apparatus 10.

Referring to FIG. 8, the image forming apparatus 10 includes an input paper tray information page generating module 1421a, an output paper tray information page generating module 1421b and a toner information page generating module 1421c as instances of the page generating module 142.

The input paper tray information page generating module 1421a is the page generating module 142 to provide information regarding an input paper tray (hereinafter which is referred to as "input paper tray information") of the image forming apparatus 10. The output paper tray information page generating module 1421b is the page generating module 142 to provide information regarding an output paper tray (hereinafter which is referred to as "output paper tray information") of the image forming apparatus 10. The toner information page generating module 1421c is the page generating module 142 to provide information regarding toner conditions (hereinafter which is referred to as "toner information") of the image forming apparatus 10.

In addition, the image forming apparatus 10 includes an input paper tray information obtaining module 1431a, an output paper tray information obtaining module 1431b and a toner information obtaining module 1431c as instances of the information obtaining module 143. As mentioned above with respect to the information obtaining module 143, the input paper tray information obtaining module 1431a, the output paper tray information obtaining module 1431b and the toner information obtaining module 1431c are called in common regardless of types of communication protocols to the terminal 20.

The input paper tray information obtaining module 1431a is the information obtaining module 143 to obtain input paper tray information. The output paper tray information obtaining module 1431b is the information obtaining module 143 to obtain output paper tray information. The toner information obtaining module 1431c is the information obtaining module 143 to obtain toner information.

An exemplary operation of the image forming apparatus 10 shown in FIG. 8 is described.

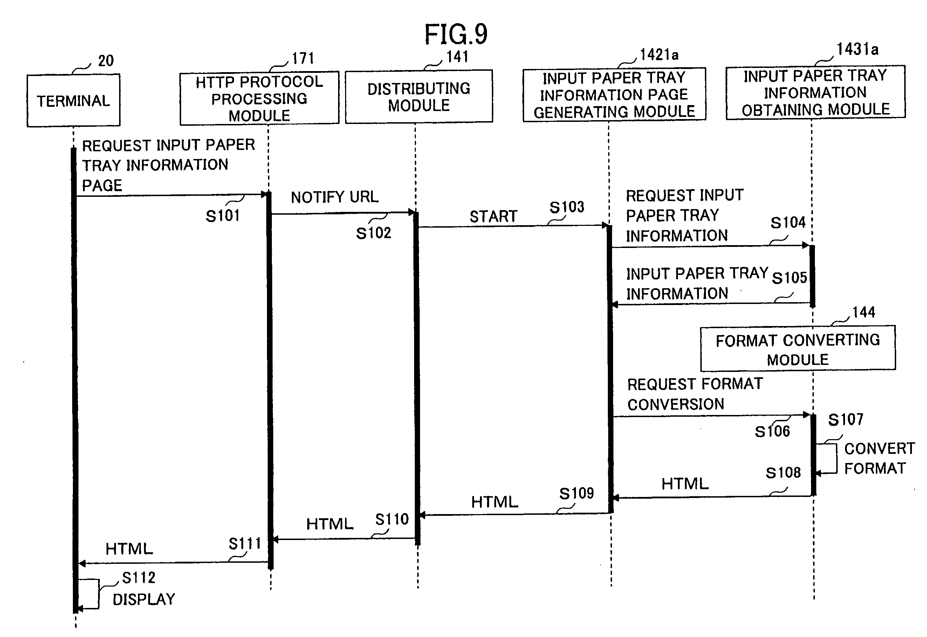

FIG. 9 is a sequence diagram to explain an operational procedure of the image forming apparatus 10 according to the first embodiment in a case where the image forming apparatus 10 communicates to the terminal 20 in accordance with HTTP.

Referring to FIG. 9, when a user of the terminal 20 inputs the URL "http://xxx/xxx/xxx/inputTray.html" for a Web page to view input paper tray information (hereinafter which is referred to as an "input paper tray information page") of the image forming apparatus 10 into a Web browser of the terminal 20, the terminal 20 sends to the image forming apparatus 10 an HTTP request for the input paper tray information page at step S101.

At step S102, in response to receipt of the HTTP request from the terminal 20, the HTTP protocol processing module 171 delivers to the distributing module 141 request identification information to identify a request for the URL "inputTray.html" of the input paper tray information page in the HTTP request.

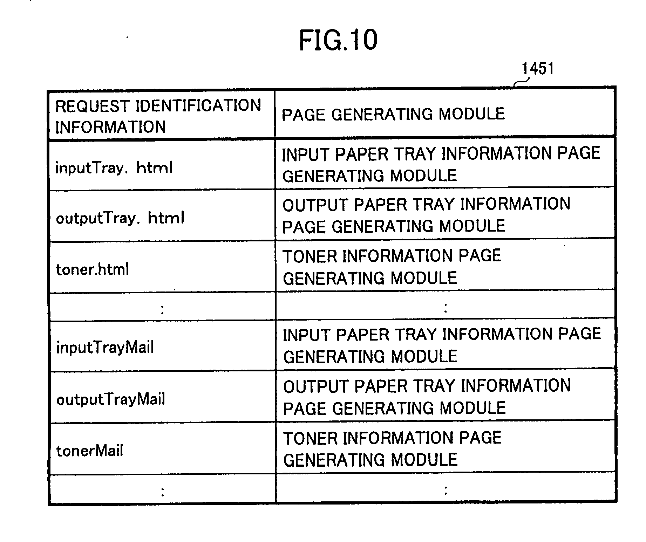

At step S103, in response to receipt of the request identification information from the HTTP protocol processing module 171, the distributing module 141 searches the corresponding page generating module table 1451 as illustrated in FIG. 10 for a page generating module 142 corresponding to the URL "inputTray.html", and then calls the detected page generating module 142.

FIG. 10 shows exemplary contents of the corresponding page generating module table 1451 according to the first embodiment.

Referring to FIG. 10, the corresponding page generating module table 1451 indicates that the page generating module 142 corresponding to the URL "inputTray.html" is the input paper tray information page generating module 1421a. Accordingly, the distributing module 141 calls the input paper tray information page generating module 1421a. When the distributing module 141 calls the input paper tray information page generating module 1421a, the distributing module 141 delivers the URL "inputTray.html" as input information to the input paper tray information page generating module 1421a.

At step S104, the input paper tray information page generating module 1421a calls the input paper tray information obtaining module 1431a to obtain the input paper tray information of the image forming apparatus 10.

At step S105, in response to the call from the input paper tray information page generating module 1421a, the input paper tray information obtaining module 1431a returns the input paper tray information to input paper tray information page generating module 1421a. It is noted that the input paper tray information at this time point depends on the data type of a program language implementing the input paper tray information page generating module 1421a. Hereinafter such program language dependant input paper tray information is referred to as "language dependant input paper tray information data".

At step S106, the input paper tray information page generating module 1421a uses the URL "inputTray.html" and the language dependant input paper tray information data obtained from the input paper tray information obtaining module 1431a as arguments to call the format converting module 144.

At step S107, the conversion control part 144 of the format converting module 144 converts the data format of the language dependant input paper tray information data into a data format requested by the terminal 20 in accordance with the operation described with respect to FIG. 6.

Specifically, the conversion control part 1441 calls the serializer 150 and supplies the language dependant input paper tray information data to the serializer 150 as input information thereto (S1 in FIG. 6). The serializer 150 converts the language dependant input paper tray information data into first DOM format and then XML format, and supplies the XML formatted input paper tray information (hereinafter which is referred to as "XML input paper tray information data") to the conversion control part 1441 (S2 in FIG. 6).

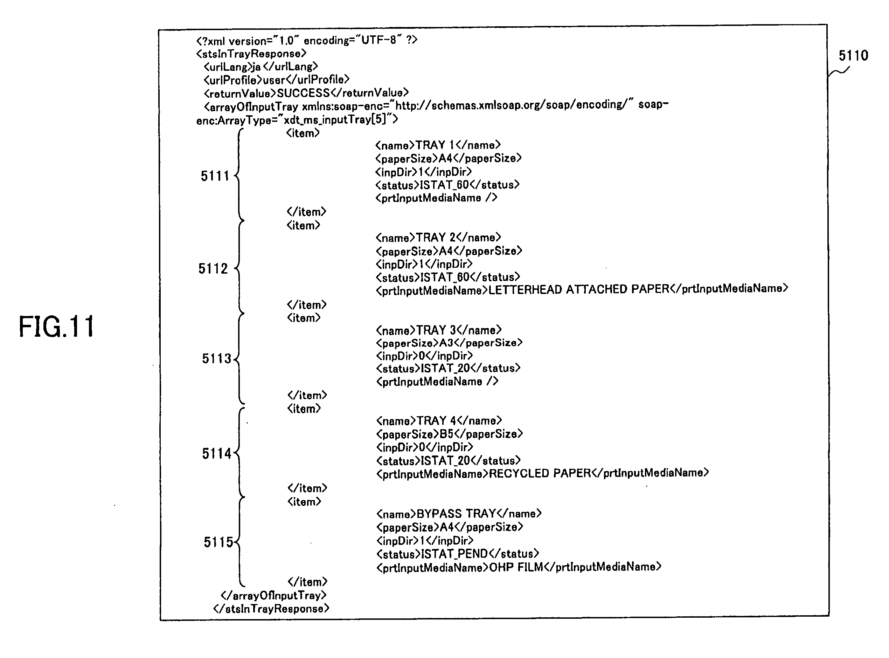

FIG. 11 shows exemplary XML input paper tray information data according to the first embodiment.

Referring to FIG. 11, XML input paper tray information data 5110 includes item elements 5111 through 5115, each of which is enclosed with tags <item> and </item> and has information regarding each tray of the image forming apparatus 10. Since the illustrated XML input paper tray information data 5110 includes five item elements 5111 through 5115, it can be concluded that the image forming apparatus 10 has five input paper trays.

Each item element is configured from "name" element, "paperSize" element, "inpDir" element, "status" element and 'prtInputMediaName" element.

The name element indicates the name of an input paper tray. The paperSize element indicates the size of a paper that an input paper tray can handle. The inpDir element indicates the paper direction of an input paper tray. Here, the paper direction is represented as "0" or "1" in which "0" and "I" mean the transversal and longitudinal directions, respectively. The status element indicates how many papers remains in an input paper tray. The value of the status element is represented in form of "ISTAT (remainder)" , as illustrated in FIG. 11, in which a ratio of remaining papers is entered in the variable "remainder". For example, if the value is represented as "ISTAT_60", it can be observed that the ratio of remaining papers is 60%. The prtInputMediaName element indicates the type of papers in an input paper tray.

As shown in FIG. 11, for example, the item element 5112 indicates that one of the input paper trays of the image forming apparatus 10 is named as "tray 2", the paper size for the input paper tray is "A4", the paper direction is "longitudinal", the remainders of the input tray is "60%", and the paper type of the input paper tray is a 'letterhead attached paper" type.

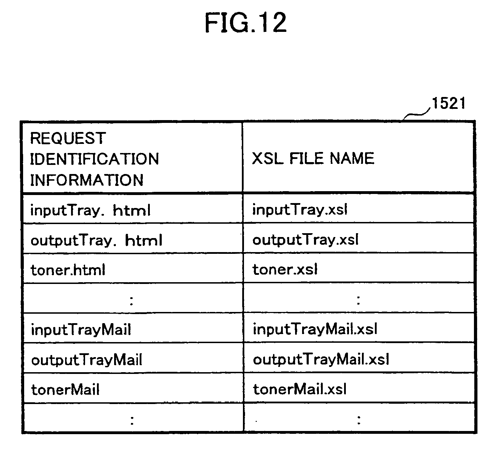

After obtaining the XML input paper tray information data 5110, the conversion control part 1441 identifies the name of an XSL file for XSLT conversion with reference to the corresponding XSL table 1521 as illustrated in FIG. 12.

FIG. 12 shows exemplary contents of the corresponding XSL table 1521 according to the first embodiment.

Referring to FIG. 12, the conversion control part 1441 searches the corresponding XSL table 1521 by using the URL "inputTray.html", which is received as the request identification information, as a search key, and detects the XSL file name "inputTray.xsl" registered in the column "XSL file name" of the corresponding record (S3 in FIG. 6). The conversion control part 1441 supplies the detected XSL file name "inputTray.xsl" and the XML input paper tray information data 5110 to the XSLT processor 151, and requests the XSLT processor 151 to convert the XML input paper tray information data 5110 (S4 in FIG. 6). In accordance with a definition (conversion rule) of the XSL file 153 having the file name "inputTray.xsl", the XSLT processor 151 converts the XMI, input paper tray information data 5110, and supplies the converted data (hereinafter which are referred to as "request format input paper tray information data") to the conversion control part 1441.

It is noted that the XSL file "inputTray.xsl" is defined to generate HTML data in this embodiment. Thus, the request format input paper tray information data are generated as HTML data. In other words, the request format input paper tray information data are an input paper tray information page.

As mentioned above, the format converting module 144 can convert the language dependant input paper tray information data into an input paper tray information page.

Referring back to FIG. 9, at step S108, the format converting module 144 supplies the generated input paper tray information page to the input paper tray information page generating module 1421a.

At step S109, in response to receipt of the input paper tray information page from the format converting module 144, the input paper tray information page generating module 1421a directly forwards the input paper tray information page to the distributing module 141 that called the input paper tray information page generating module 1421a.

At step S110, the distributing module 141, in turn, forwards the input paper tray information page to the HTTP protocol processing module 171 that called the distributing module 141.

At step S111, the HTTP protocol processing module 171 sends the input paper tray information page to the terminal 20 as an HTTP response.

At step S112, in response to receipt of the input paper tray information page from the HTTP protocol processing module 171, the terminal 20 displays the input paper tray information page on the Web browser thereof.

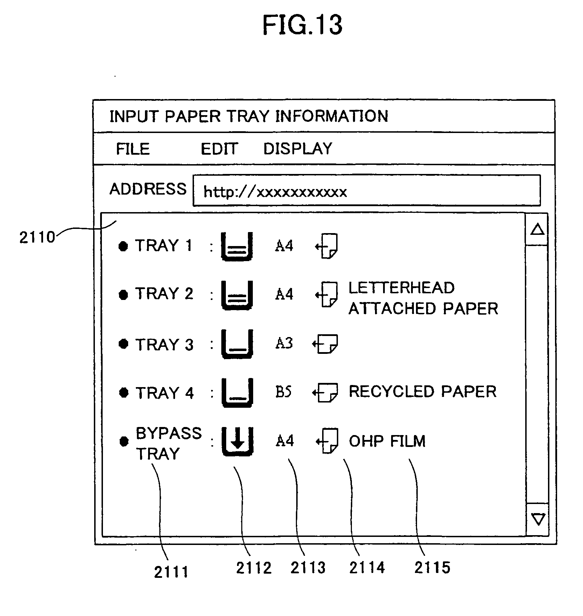

FIG. 13 shows exemplary displayed contents of the input paper tray information page according to the first embodiment.

Referring to FIG. 13, names, paper remainders, paper sizes, paper directions and paper types in the input paper tray information page 2110 are represented for individual trays in the order starting from the left. For example, for the bypass tray in the item element 5115 shown in FIG. 11, the name item 2111 is represented as a "bypass tray" in FIG. 13. In addition, the icon indicating that there is no remaining paper is displayed for the paper remainder item 2112. The paper size item 2113 is represented as A4". The icon indicating that the paper direction is longitudinal is displayed for the paper direction item 2114. Also, the paper type item 2115 is represented as "OHP film". It is noted that the respective displayed values are based on conversion results of the name element, the status element, the paperSize element, the inpDir element and the prtInputmediaName element of the item element 5115 in the XML input paper tray information data 5110. The user of the terminal 20 can check information regarding the input paper tray of the image forming apparatus 10 by viewing the input paper tray information page.

An exemplary operation of the image forming apparatus 10 according to the first embodiment in a case where the image forming apparatus 10 receives an information transmission request via an e-mail.

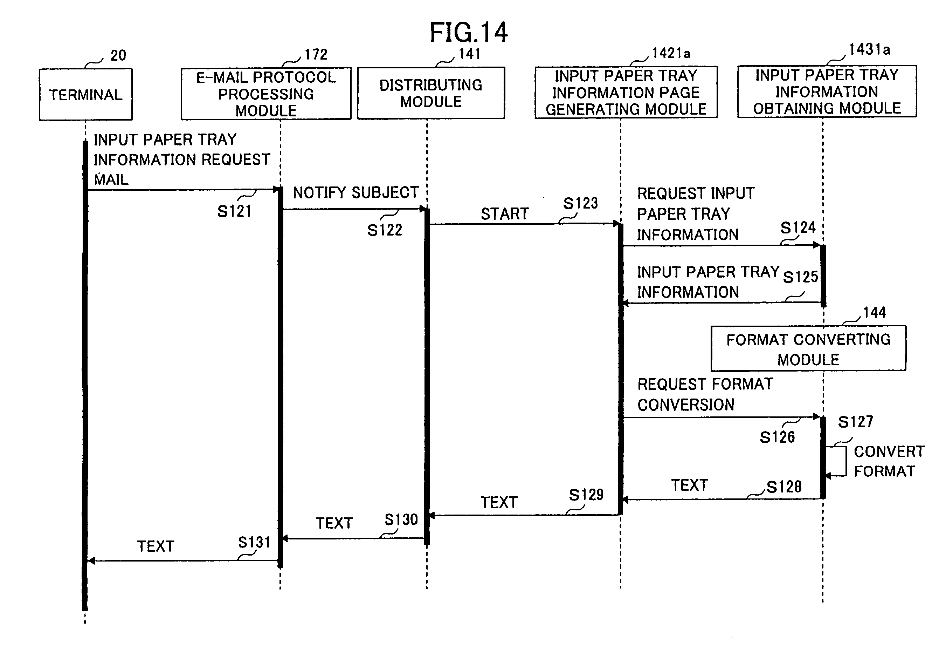

FIG. 14 is a sequence diagram to explain an operational procedure of the image forming apparatus 10 according to the first embodiment in a case where the image forming apparatus 10 communicates to the terminal 20 via an e-mail. The process flow of the image forming apparatus 10 shown in FIG. 14 is basically similar to that of the image forming apparatus 10 shown in FIG. 9. Thus, the following description is focused on operations different between the two cases.

Referring to FIG. 14, when a user of the terminal 20 creates an e-mail that has a destination address for the image forming apparatus 10 and designates the string "inputTrayMail^ corresponding to request identification information in the subject field or the body thereof, which is referred to as an "input paper tray information request mail", the terminal 20 sends the input paper tray information request mail to the image forming apparatus 10 at step S121.

At step S122, in response to receipt of the input paper tray information request mail from the terminal 20, the e-mail protocol processing module 172 of the image forming apparatus 10 sends to the distributing module 141 the string "inputTrayMail" in the subject field or the body of the input paper tray information request mail as request identification information.

In the subsequent operation, the image forming apparatus 10 performs the same process as that illustrated in FIG. 9 except that the request identification information is for "inputTrayMail".

At step S123, the distributing module 141 of the image forming apparatus 10 searches the corresponding page generating module table 1451 for the page generating module 142 corresponding to "inputTrayMail". Since the corresponding page generating module table 1451 indicates that the corresponding page generating module 142 is the input paper tray information page generating module 1421a, the distributing module 141 calls the input paper tray information page generating module 1421a.

After step S124 and S125, the input paper tray information page generating module 1421a performs the same process as that illustrated in FIG. 9 to obtain input paper tray information (language dependant input paper tray information data) from the input paper tray information obtaining module 1431a.

At step S126, the input paper tray information page generating module 1421a requests the format converting module 144 to convert the language dependant input paper tray information data.

At step S127, the format converting module 144 performs the same process as that illustrated in FIG. 6 to convert the language dependant input paper tray information data. Specifically, the conversion control part 1441 of the format converting module 144 converts the language dependant input paper tray information data into XML input paper tray information data 5110 (S1 and S2 in FIG. 6). In addition, the conversion control part 1441 detects the file name of an XSL file 153 corresponding to the request identification information from the corresponding XSL table 152 (S3 in FIG. 6). Since the corresponding XSL table 1521 indicates that the corresponding XSL file name is "inpuTrayMail.xsl", the conversion control part 1441 supplies the file name "inputTrayMail.xsl" and the XML input paper tray information data 5110 to the XSL processor 151, and requests the XSLT processor 151 to convert the XML input paper tray information data 5110 (S4 in FIG. 6).

In accordance with a definition of the XSL file corresponding to the file name "inputTrayMail.xsl", the X-SLT processor 151 XSLT-converts the XML input paper tray information data 5110, and supplies to the conversion control part 1441 the converted request format input paper tray information data (S5 in FIG. 6).

In this embodiment, since the XSL file "inputTrayMail.xsl" is defined to create text data, the request format input paper tray information data are generated as text data.

At steps S128 through S130, the text data are sequentially supplied to respective calling units as in steps S108 through S110 in FIG. 9.

At step S131, the e-mail protocol processing module 172 sends the request format input paper tray information data (hereinafter which is referred to as an "input paper tray information mail") to the terminal 20. The user of the terminal 20 can check information on the individual input paper trays of the image forming apparatus 10 by viewing the received input paper tray information mail.

Similarly to the above-mentioned input paper tray information page generating module 1421a, the output paper tray information page generating module 1421b and the toner information page generating module 1421c can provide output paper tray information and toner information.

Specifically, a user of the terminal 20 inputs the URL "http://xxx/xxx/xxx/outputTray.html" of a web page for viewing output paper tray information on a Web browser of the terminal 20. Alternatively, the user creates an e-mail that has a destination address for the image forming apparatus 10 and designates the string "outputTrayMail" in the subject filed thereof, and instructs the terminal 20 to send the created output paper tray information request mail to the image forming apparatus 10. In response to the user's manipulation, the terminal 20 sends to the image forming apparatus 10 an HTTP request for an output paper tray information page or an output paper tray information request mail.

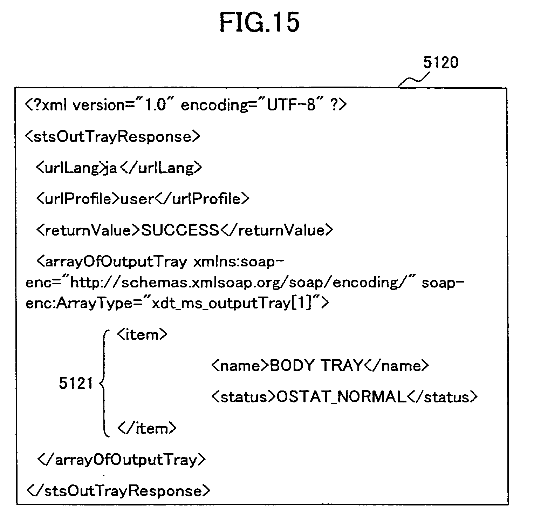

In response to receipt of the HTTP request or the output paper tray information request mail from the terminal 20, the image forming apparatus 10 performs the same process as that illustrated in FIG. 9 or FIG. 15 by using the string "outputTray.html" or "outputTrayMail" as request identification information.

Specifically, the distributing module 141 of the image forming apparatus 10 calls the output paper tray information page generating module 1421b (refer to FIG. 10) corresponding to the request identification information "outputTray.html" or "outputTrayMail". The called output paper tray information page generating module 1421b uses the output paper tray information obtaining module 1431b to obtain output paper tray information (language dependant output paper tray information data). Then, the output paper tray information page generating module 1421b requests the format converting module 144 to convert the language dependant output paper tray information data into a Web page (hereinafter which is referred to as an "output paper tray information page") or text data (hereinafter which is referred to as an "output paper tray information mail").

The conversion control part 1441 of the format converting module 144 uses the serializer 150 to convert the language dependant output paper tray information data into XML formatted data (hereinafter which is referred to as "XML output paper tray information data").

FIG. 15 shows exemplary contents of the XML output paper tray information data according to the first embodiment.

Referring to FIG. 15, information regarding an output paper tray is described in an item element 5121 enclosed with tags <item> and </item> in the XML output paper tray information data 5120. In this embodiment, since one item element is described in the XML output paper tray information data 5120, it can be concluded that one output paper tray is provided in the image forming apparatus 10. On the other hand, if a plurality of output paper trays are provided in the image forming apparatus 10, a plurality of item elements are described in the XML output paper tray information data 5120.

Each item element is configured from a name element and a status element. The name element indicates the name of the output paper tray. The status element indicates a status of the output paper tray. The value of the status element is represented in form of "OSTAT_(status)" wherein a string to represent a status of the output paper tray is entered in the (status). For example, the value "OSTAT_NORMAL" indicates that the output paper tray can operate without trouble. As shown in FIG. 15, the name of the output paper tray of the image forming apparatus 10 is "body tray", and the XML output paper tray information data indicate that the body tray can normally operate.

By using the XSL file "outputTray.xsl" corresponding to request identification information "outputTray.html" or the XSL file "outputTrayMail.xsl" corresponding to request identification information "outputTrayMail" (refer to FIG. 12), the conversion control part 1441 causes the XSLT processor 151 to convert the XML output paper tray information data 5120 into an HTML formatted output paper tray information page or a text formatted output paper tray information mail. The resulting output paper tray information page or output paper tray information mail is sent to the terminal 20.

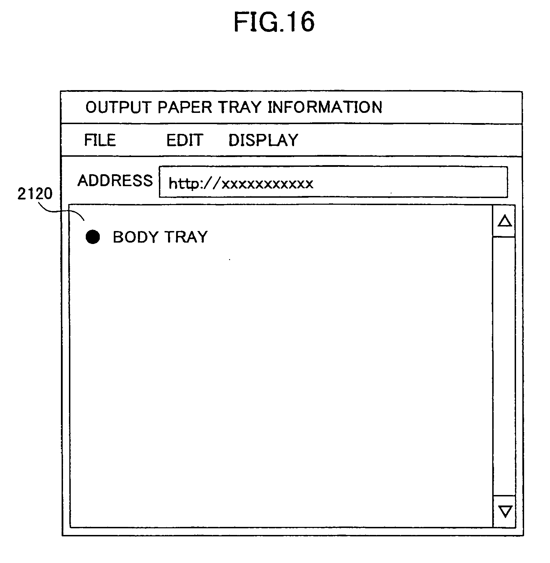

FIG. 16 shows exemplary displayed contents of the output paper tray information page according to the first embodiment.

Referring to FIG. 16, for each output paper tray, the name and the status thereof may be displayed in the output paper tray information page 2120. In this embodiment, if there is no problematic output paper tray in the image forming apparatus 10, the status information is not displayed in the output paper tray information page 2120. Thus, no information is displayed for the normally operating body tray in the output paper tray information page 2120. After the XSLT processor 151 converts an item element 5121 in the XML output paper tray information data 5120 shown in FIG. 15 in accordance with the XSL file 153 "outputTray.xsl", the conversion result is displayed as vales in the output paper tray information page 2120.

On the other hand, a user of the terminal 20 inputs the URL "http://xxx/xxx/xxx/toner.html" of a Web page for viewing toner information in the Web browser of the terminal 20. Alternatively, the user creates an e-mail that has a destination address for the image forming apparatus 10 and designates the string "tonerMail" in the subject field thereof (hereinafter which is referred to as a "toner information request mail", and instructs the terminal 20 to send the created toner information request mail to the image forming apparatus 10. In response to receipt of the instruction, the terminal 20 sends an HTTP request for a toner information page or a toner information request mail to the image forming apparatus 10.

In response to receipt of the HTTP request or the toner information request mail from the terminal 20, the image forming apparatus 10 performs the same process as that illustrated in FIG. 9 or FIG. 15 by using "toner.html" or "tonerMail" as request identification information.

Specifically, the distributing module 141 calls the toner information page generating module 1421c (ref. FIG. 10) corresponding to the request identification information "toner.html" and "tonerMail". The called toner information page generating module 1421c uses the toner information obtaining module 1431c to obtain toner information (hereinafter which is referred to as "language dependant toner information data"). Then, the toner information page generating module 1421c requests the format converting module 144 to convert the language dependant toner information data into a Web page (hereinafter which is referred to as a "toner information page") or text data (hereinafter which is referred to as a "toner information mail").

The conversion control part 1441 of the format converting module 144 uses the serializer 150 to convert the language dependant toner information data into XML formatted data (hereinafter which is referred to as "XML toner information data").

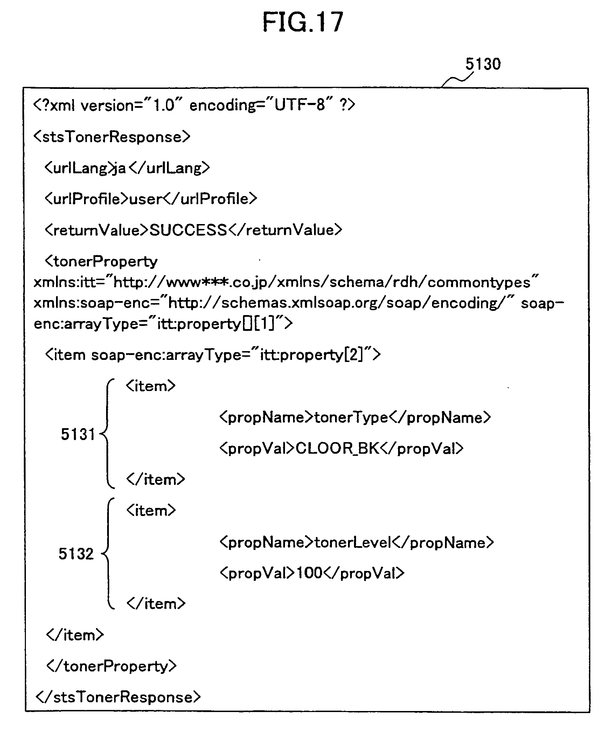

FIG. 17 shows exemplary contents of the XML toner information data according to the first embodiment.

Referring to FIG. 17, attribute information regarding a toner is represented in the XML toner information data 5130 by using item elements 5131 and 5132 each of which is enclosed with tags <item> and </item>. Each item element is configured from "propName" element and "propVal" element. The propName element designates the attribute name. The propVal element designates the attribute value. For example, the item element 5131 represents the tonerType attribute indicative of a toner type and has the value "COLOR_BK" indicative of black. On the other hand, the item element 5132 represents the tonerLevel attribute indicative of an amount of remaining toner and has the value "100" indicative of 100%.

Thus, the item elements 5131 and 5132 indicate that the remaining amount of black toner is 100%. In FIG. 17, only one piece of toner information is described. However, if the image forming apparatus 10 has a plurality of toners, the XML toner information data 5130 has the same number of pairs of the item elements 5131 and 5132 as the number of toners.

The conversion control part 1441 uses the XSL file "toner.xsl" corresponding to the request identification information "toner.html" and the XSL file "tonerMail.xsl" of the request-identification information "tonerMail" to cause the XSLT processor 151 to convert the XML toner information data 5130 into an HTML formatted toner information page or a text formatted toner information mail. Then, the toner information page or the toner information mail is sent to the terminal 20.

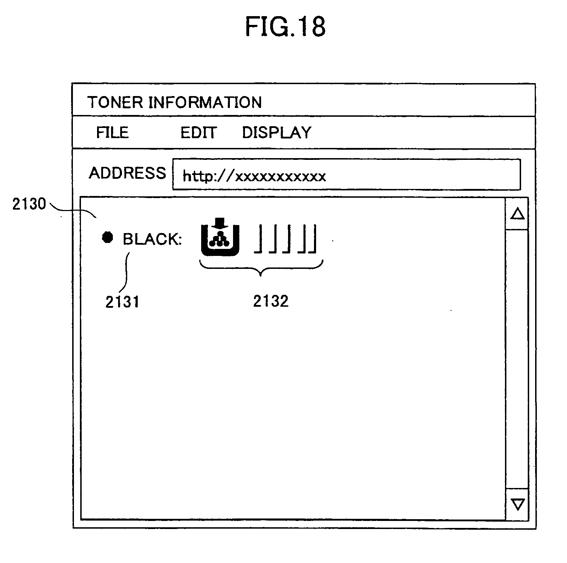

FIG. 18 shows exemplary displayed contents of the toner information page according to the first embodiment.

Referring to FIG. 18, the type and remaining amount of each toner is displayed on the toner information page 2130. Specifically, the toner type is displayed on an item 2131 as "black". An icon indicative of the remaining amount of the toner is displayed on an item 2132. After the XSLT processor 151 converts the item elements 5131 and 5132 in the XML toner information data 5130 in accordance with the XSL file 153 "toner.xsl", the conversion result is displayed as values on the toner information page 2130.

According to the first embodiment, the format converting module 144 of the image forming apparatus 10 dynamically determines the data format of data transmitted to the terminal 20 based on request identification information. Thus, the page generating module 142 such as the input paper tray information page generating module 1421a does not have to know the data format of data including requested dynamic information regarding the image forming apparatus 10.

Specifically, it is sufficient that the input paper tray information page generating module 1421a can perform only an process to obtain the dynamic information independent of data formats required by protocols and the terminal 20. Accordingly, even if the image forming apparatus 10 and the terminal 20 communicate to each other in accordance with HTTP, an e-mail or other protocols, the single page generating module 142 can be used and it is unnecessary to provide a plurality of separate page generating modules 142 corresponding to individual protocols or data formats required by the terminal 20 to the image forming apparatus 10.

In addition, the format converting module 144 can be used in common regardless of types of protocols and page generating modules 142. Thus, various data conversion processes corresponding to the individual page generating modules 142 do not have to be provided to the image forming apparatus 10.

Thus, according to the first embodiment, it is possible to improve development efficiency compared to a case where a plurality of the page generating modules 142 are provided corresponding to individual protocols. At the same time, it is possible to reduce loads on memory devices of the image forming apparatus 10.

In the above discussion, the format converting module 144 uses the serializer 150 and the XSLT processor 151 to convert language dependant data into XML formatted data and XSLT formatted data, respectively. However, the image forming apparatus 10 according to the present invention is not limited to the conversion. For example, a template file different from the XSL file 153 may be used to generate a Web page and text data from language dependant data directly.

A second embodiment of the present invention is described in detail below. In the second embodiment, static information regarding the image forming apparatus 10 is provided. Here, the "static information" means types of information items of which contents is not changed depending on operational statuses of the image forming apparatus 10. For example, such static information includes information items regarding function information, system information and emulation information of the image forming apparatus 10.

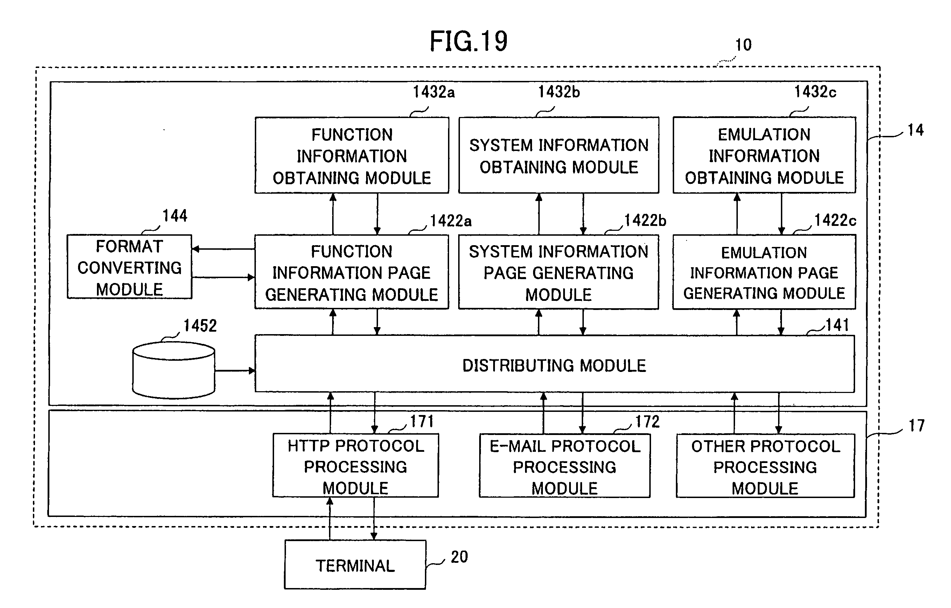

FIG. 19 shows an exemplary functional structure of an information providing application according to the second embodiment. In FIG. 19, the same components as those in FIG. 4 are referred to as the same reference numerals and the description thereof is omitted.

Referring to FIG. 19, the image forming apparatus according to the second embodiment includes a function information page generating module 1422a, a system information page generating module 1422b and an emulation information page generating module 1422c.

The function information page generating module 1422a is the page generating module 142 to provide information regarding functions of the image forming apparatus 10 (hereinafter which is referred to as "function information"). The system information page generating module 1422b is the page generating module 142 to provide system information regarding the image forming apparatus 10. The emulation information page generating module 1422c is the page generating module 142 to provide emulation information regarding the image forming apparatus 10 (hereinafter which is referred to as "emulation information").

In addition, the image forming apparatus 10 includes a function information obtaining module 1432a, a system information obtaining module 1432b and an emulation information obtaining module 1432c as instances of the information obtaining module 143. As mentioned above with respect to the information obtaining module 143, the function information obtaining module 1432a, the system information obtaining module 1432b and the emulation information obtaining module 1432c are called in common regardless of types of communication protocols to the terminal 20.

The function information obtaining module 1432a is the information obtaining module 143 to obtain function information. The system information obtaining module 1432b is the information obtaining module 143 to obtain system information. The emulation information obtaining module 1432c is the information obtaining module 143 to obtain emulation information.

An exemplary operation of the image forming apparatus 10 shown in FIG. 19 is described.

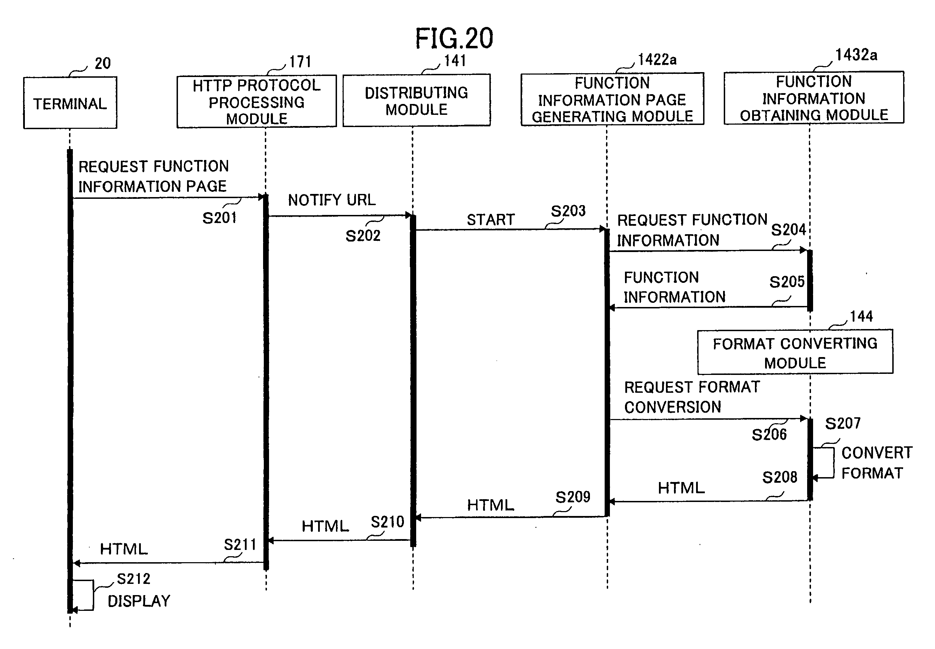

FIG. 20 is a sequence diagram to explain an operational procedure of the image forming apparatus 10 according to the second embodiment in a case where the image forming apparatus 10 communicates to the terminal 20 in accordance with HTTP.

Referring to FIG. 20, when a user of the terminal 20 inputs the URh -http://xxx/xxx/xxx/function.html" for a Web page to view function information (hereinafter which is referred to as a function information page) regarding the image forming apparatus 10 into a Web browser of the terminal 20, the terminal 20 sends to the image forming apparatus 10 an HTTP request for a function information page.

At step S202, in response to receipt of the HTTP request from the terminal 20, the HTTP protocol processing module 171 of the image forming apparatus 10 informs the distributing module 141 of request identification information to identify a request for the URL "function.html" of the function information page in the HTTP request.

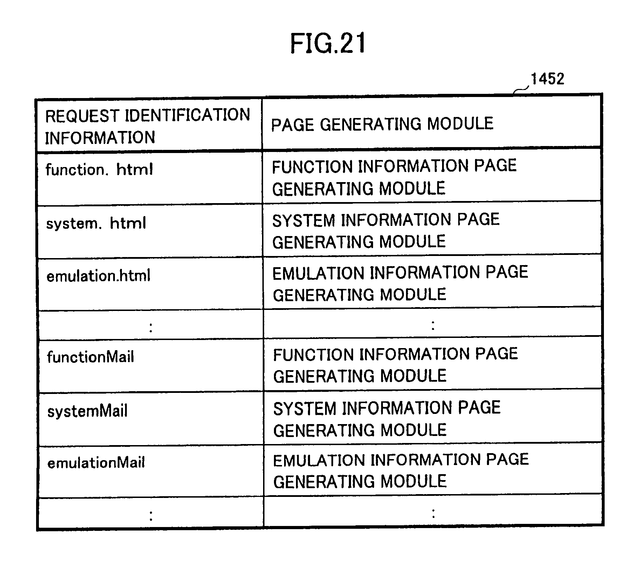

At step S203, in response to receipt of the request identification information from the HTTP protocol processing module 171, the distributing module 141 searches the corresponding page generating module table 1452 shown in FIG. 21 for a page generating module 142 corresponding to the URL "function.html", and then calls the detected page generating module 142.

FIG. 21 shows exemplary contents of the corresponding page generating module table 1452 according to the second embodiment.

Referring to FIG. 21, the corresponding page generating module table 1452 indicates that the page generating module 142 corresponding to the URL "function.html" is the function information page generating module 1422a. Accordingly, the distributing module 141 calls the function information page generating module 1422a. When the distributing module 141 calls the function information page generating module 1422a, the distributing module 141 delivers the URL "function.html" as input information to the function information page generating module 1422a.

At step S204, the function information page generating module 1422a calls the function information obtaining module 1432a to obtain the function information of the image forming apparatus 10.

At step S205, in response to the call from the function information page generating module 1422a, the function information obtaining module 1432a returns the function information to the function information page generating module 1422a. It is noted that the function information at this time point depends on the data type of a program language implementing the function information page generating module 1422a. Hereinafter such program language dependant function information is referred to as "language dependant function information data".

At step S206, the function information page generating module 1422a uses the URL "function.html" and the language dependant function information data obtained from the function information obtaining module 1432a as arguments to call the format converting module 144.

At step S207, the conversion control part 144 of the format converting module 144 converts the data format of the language dependant function information data into a data format requested by the terminal 20 in accordance with the operation described with respect to FIG. 6.

Specifically, the conversion control part 1441 calls the serializer 150 and supplies the language dependant function information data to the serializer 150 as input information (S1 in FIG. 6). The serializer 150 converts the language dependant function information data into first DOM format and then XML format, and supplies the XML formatted function information (hereinafter which is referred to as "XML function information data") to the conversion control part 1441 (S2 in FIG. 6).

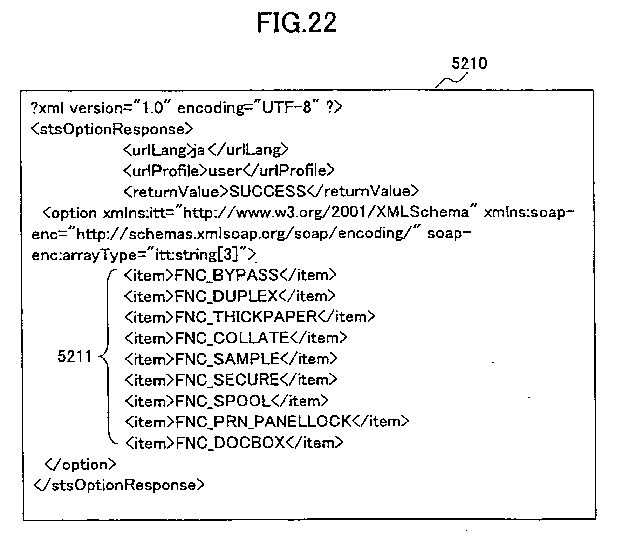

FIG. 22 shows exemplary XML function information data according to the second embodiment.

Referring to FIG. 22, XML function information data 5210 includes a descriptive portion 5211 in which each element enclosed with tags <item> and </item> corresponds to respective function of the image forming apparatus 10. Identification information to identify the function is entered in the element. Specifically, functions of the image forming apparatus 10 are listed in the descriptive portion 5211. It can be observed from the descriptive portion 5211 that the image forming apparatus 10 includes functions that can be identified by the strings "FNC_BYPASS", "FNC_DUPLEX", "FNC_THICK PAPER", "FNC_COLLATE", "FNC_SAMPLE", "FNC_SECURE", "FNC_SPOOL", "FNC_PRN_PANELLOCK" and "FNC_DOCBOX".

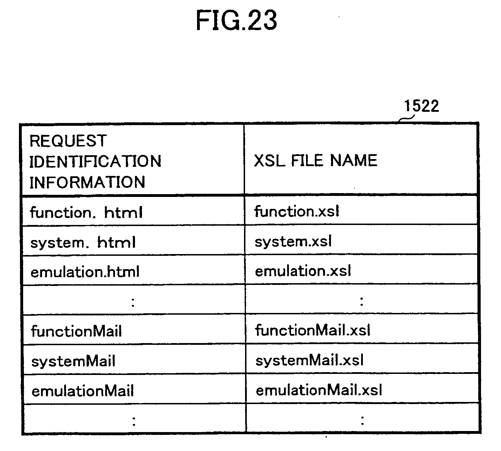

After obtaining the XML function information data 5210, the conversion control part 1441 identifies the name of an XSL file for XSLT conversion with reference to the corresponding XSL table 1522 as illustrated in FIG. 23.

FIG. 23 shows exemplary contents of the corresponding XSL table 1521 according to the second embodiment.

Referring to FIG. 23, the conversion control part 1441 searches the corresponding XSL table 1522 by using the URL "funtion.html", which is received as the request identification information, as a search key, and detects the XSL file name "function.xsl" registered in the column "XSL file name" of the corresponding record (S3 in FIG. 6). The conversion control part 1441 supplies the detected XSL file name "function.xsl" and the XML function information data 5210 to the XSLT processor 151, and requests the XSLT processor 151 to convert the XML function information data 5210 (S4 in FIG. 6). In accordance with the definition (conversion rule) of the XSL file 153 having the file name "function.xsl", the XSLT processor 151 XSLT-converts the XML function information data 5210, and supplies the converted data (hereinafter which is referred to as "request format function information data") to the conversion control part 1441.

It is noted that the XSL file "function.xsl" is defined to generate HTML data in this embodiment. Thus, the request format function information data are generated as HTML data. In other words, the request format function information data are a function information page.

As mentioned above, the format converting module 144 can convert the language dependant function information data into a function information page.

Referring back to FIG. 20, at step S208, the format converting module 144 supplies the generated function information page to the function information page generating module 1422a.

At step S209, in response to receipt of the function information page from the format converting module 144, the function information page generating module 1422a directly forwards the function information page to the distributing module 141 that called the function information page generating module 1422a.

At step S210, the distributing module 141, in turn, forwards the function information page to the HTTP protocol processing module 171 that called the distributing module 141.

At step S211, the HTTP protocol processing module 171 sends the function information page to the terminal 20 as an HTTP response.

At step S212, in response to receipt of the function information page from the HTTP protocol processing module 171, the terminal 20 displays the function information page on the Web browser thereof.

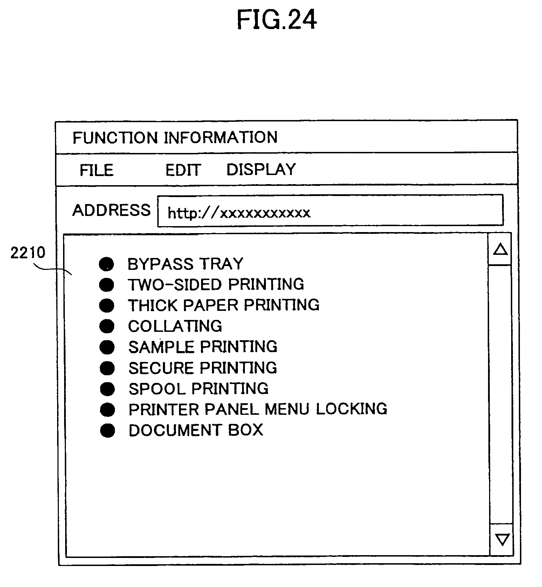

FIG. 24 shows exemplary displayed contents of the function information page according to the second embodiment.

Referring to FIG. 24, functions of the image forming apparatus 10 are listed in the function information page 2210. Starting from the upper of the list, "bypass tray paper feeding", "two-sided printing", thick paper printing", "collating", "sample printing", secure printing", spool printing", printer panel menu locking" and "document box" are presented in the order. The displayed contents are displayed based on a result of conversion in which the XSLT processor 151 converts the descriptive portion 5211 in the XML function information data 5210 shown in FIG. 22 in accordance with the XSL file 153 "function.xsl". The usr of the terminal 20 can check information regarding the functions of the image forming apparatus 10 by viewing the function information page.

An exemplary operation of the image forming apparatus 10 according to the second embodiment in a case where the image forming apparatus 10 receives an information transmission request via an e-mail.

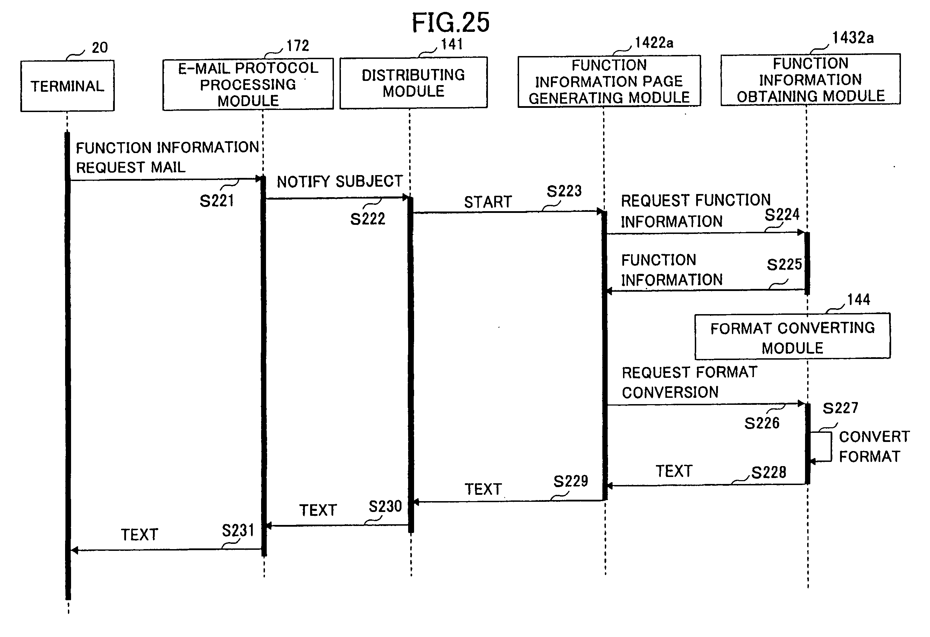

FIG. 25 is a sequence diagram to explain an operational procedure of the image forming apparatus 10 according to the second embodiment in the case where the image forming apparatus 10 communicates to the terminal 20 via an e-mail. The process flow of the image forming apparatus 10 shown in FIG. 25 is basically similar to that of the image forming apparatus 10 shown in FIG. 20. Thus, the following description is focused on operations different between the two cases.

Referring to FIG. 25, when a user of the terminal 20 creates an e-mail that has a destination address for the image forming apparatus 10 and designates the string "functionMail" corresponding to request identification information in the subject field or the body thereof, which is referred to as an "function information request mail", the terminal 20 sends the function information request mail to the image forming apparatus 10 at step S221.

At step S222, in response to receipt of the function information request mail from the terminal 20, the e-mail protocol processing module 172 of the image forming apparatus 10 sends to the distributing module 141 the string "functionMail" in the subject field or the body of the function information request mail as request identification information.

In the subsequent operation, the image forming apparatus 10 performs the same process as that illustrated in FIG. 20 except that the request identification information is for "functionMail".

At step S223, the distributing module 141 of the image forming apparatus 10 searches the corresponding page generating module table 1452 for a page generating module 142 corresponding to "functionMail". Since the corresponding page generating module table 1452 indicates that the corresponding page generating module 142 is the function information page generating module 1422a, the distributing module 141 calls the function information page generating module 1422a.

After step S224 and S225, the function information page generating module 1422a performs the same process as that illustrated in FIG. 20 to obtain function information (language dependant function information data) from the function information obtaining module 1432a.

At step S226, the function information page generating module 1422a requests the format converting module 144 to convert the language dependant function information data.

At step S227, the format converting module 144 performs the same process as that illustrated in FIG. 6 to convert the language dependant function information data. Specifically, the conversion control part 1441 of the format converting module 144 converts the language dependant function information data into XML function information data 5210 (S1 and S2 in FIG. 6). In addition, the conversion control part 1441 detects the file name of an XSL file 153 corresponding to the request identification information from the corresponding XSL table 152 (S3 in FIG. 6). Since the corresponding XSL table 1522 indicates that the corresponding XSL file name is "functionMail.xsl", the conversion control part 1441 supplies the file name "functionMail.xsl" and the XML function information data 5210 to the XSL processor 151, and requests the XSLT processor 151 to convert the XML function information data 5210 (S4 in FIG. 6) .

In accordance with the definition of the XSL file corresponding to the file name "functionMail.xsl", the XSLT processor 151 XSLT-converts the XML function information data 5210, and supplies to the conversion control part 1441 the converted request format function information data (S5 in FIG. 6).

In this embodiment, since the XSL file "functionMail.xsl" is defined to create text data, the request format function information data are generated as text data.

At steps S228 through S230, the text data are sequentially supplied to respective calling units as in steps S208 through S210 in FIG. 20.

At step S231, the e-mail protocol processing module 172 sends the request format function information data (hereinafter which is referred to as a "function information mail") to the terminal 20. The user of the terminal 20 can check function information on the image forming apparatus 10 by viewing the received function information mail.

Similarly to the above-mentioned function information page generating module 1422a, the system information page generating module 1422b and the emulation information page generating module 1422c can provide system information and emulation information.

Specifically, a user of the terminal 20 inputs the URL "http://xxx/xxx/xxx/system.html" of a Web page for viewing system information on a Web browser of the terminal 20. Alternatively, the user creates an e-mail that has a destination address for the image forming apparatus 10 and designates the string "systemMail" in the subject filed thereof (hereinafter which is referred to as a "system information request mail", and instructs the terminal 20 to send the created system information request mail. In response to the user's manipulation, the terminal 20 sends to the image forming apparatus 10 an HTTP request for a system information page or a system information request mail.

In response to receipt of the HTTP request or the system information request mail from the terminal 20, the image forming apparatus 10 performs the same process as that illustrated in FIG. 20 or FIG. 25 by using the string "system.html" or "systemMail" as request identification information.

Specifically, the distributing module 141 of the image forming apparatus 10 calls the system information page generating module 1422b (ref. FIG. 21) corresponding to the request identification information "system.html" or "systemMail". The called system information page generating module 1422b uses the system information obtaining module 1432b to obtain system information (hereinafter which is referred to as "language dependant system information data"). Then, the system information page generating module 1422b requests the format converting module 144 to convert the language dependant system information data into a Web page (system information page) or text data (system information mail).

The conversion control part 1441 of the format converting module 144 uses the serializer 150 to convert the language dependant system information data into XML formatted data (XML system information data).

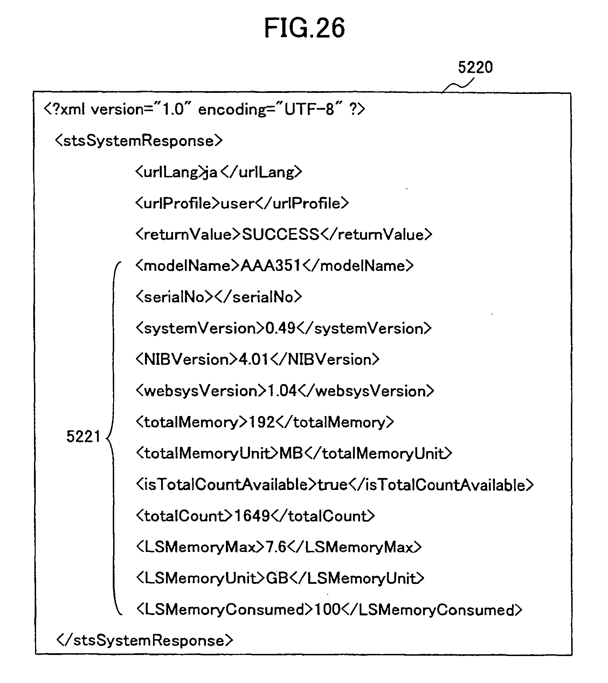

FIG. 26 shows exemplary contents of the XML system information data according to the second embodiment.

Referring to FIG. 26, attributes constructing the system information are listed in a descriptive portion 5221 of the XML system information data 5220. Each attribute value is enclosed with tags <item> and </item> to identify respective attributes. For example, the element enclosed with the tags <modelName> and </modelName> indicates that the model name of the image forming apparatus 10. Similarly, individual elements enclosed with tag pairs: <serialNo> tags, <systemVersion> tags, <NIBVersion> tags, <websysVersion> tags, <totalMemory> tags, <totalMemoryUnit> tags, <isTotalCountAvailable> tags, <totalCount> tags, <LSMemoryMax> tags, <LSMemoryUnit> tags and <LSMemoryConsumed> tags indicate respective corresponding attributes.

The conversion control part 1441 uses the XSL file "system.xsl" corresponding to the request identification information "system.html" or the XSL file "systemMail.xsl" corresponding to the request identification information "systemMail" (ref. FIG. 23) to cause the XSLT processor 151 to convert the XML system information data 5220 into an HTML formatted system information page or a text formatted system information mail. The system information page or the system information mail is sent to the terminal 20.

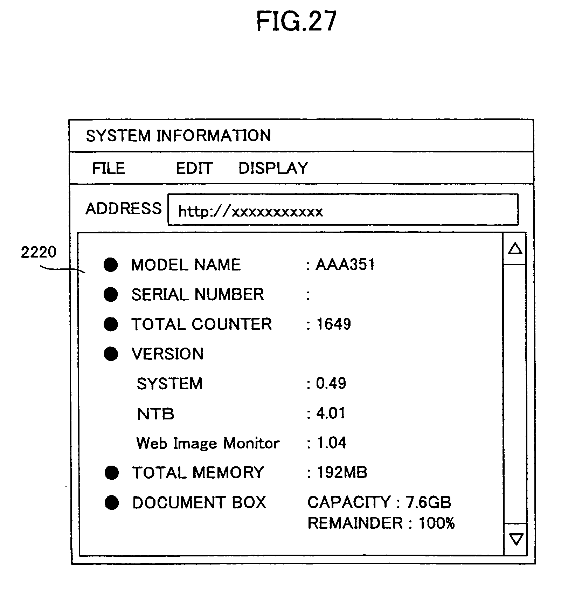

FIG. 27 shows exemplary displayed contents of the system information page according to the second embodiment.

Referring to FIG. 27, system information regarding the image forming apparatus 10 is displayed in the system information page 2220. Starting from the upper of the displayed contents, "model name", "serial number", "total counter", "version" and so on are displayed. The processor 151 converts the descriptive portion 5221 of the XML system information data 5220 shown in FIG. 26 in accordance with the XSL file 153 "system.xsl", resulting in the displayed system information.

On the other hand, a user of the terminal 20 inputs the URL "http://xxx/xxx/xxx/emulation.html" of a Web page (hereinafter which is referred to as an "emulation information page") for viewing emulation information in the Web browser of the terminal 20. Alternatively, the user creates an e-mail that has a destination address for the image forming apparatus 10 and designates the string "emulationMail" in the subject field thereof (hereinafter which is referred to as a "emulation information request mail", and instructs the terminal 20 to send the created emulation information request mail to the image forming apparatus 10. In response to receipt of the instruction, the terminal 20 sends an HTTP request for an emulation information page or an emulation information request mail to the image forming apparatus 10.

In response to receipt of the HTTP request or the emulation information request mail from the terminal 20, the image forming apparatus 10 performs the same process as that illustrated in FIG. 20 or FIG. 25 by using "emulation.html" or "emulationMail" as request identification information.

Specifically, the distributing module 141 calls the emulation information page generating module 1422c (ref. FIG. 21) corresponding to the request identification information "emulation.html" and "emulationMail". The called emulation information page generating module 1422c uses the emulation information obtaining module 1432c to obtain emulation information (language dependant emulation information data). Then, the emulation information page generating module 1422c requests the format converting module 144 to convert the language dependant emulation information data into a Web page (emulation information page) or text data (emulation information mail) .

The conversion control part 1441 of the format converting module 144 uses the serializer 150 to convert the language dependant emulation information data into XML formatted data (XML emulation information data).

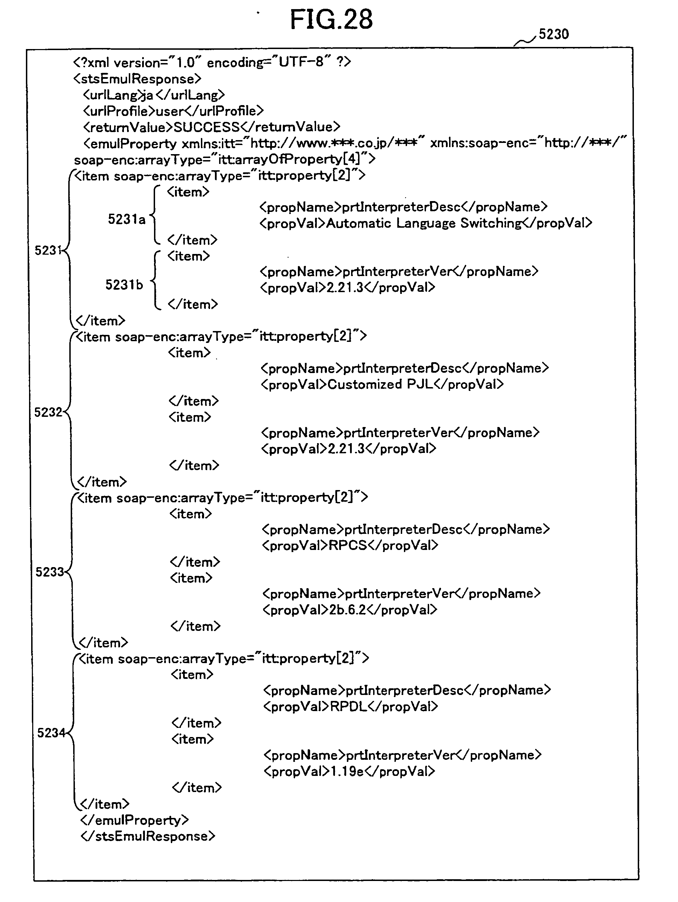

FIG. 28 shows exemplary contents of the XML emulation information data according to the second embodiment.

Referring to FIG. 28, exemplary XML emulation information data 5230 are represented. In the XML emulation information data 5230, individual descriptive portions 5231, 5232, 5233 and 5234 represent emulation information items. In this embodiment, the image forming apparatus 10 has four emulations. Each descriptive portion is configured from two item elements each of which is enclosed with tags <item> and </item>. For example, the descriptive portion 5231 is configured from the item elements 5231a and 5231b. Each item element is further configured from the propName element and the propVal element. The propName element designates the attribute name. The propVal element designates the attribute value. As shown in FIG. 28, for example, the item element 5231a indicates "prtInterpreterDesc" attribute (emulation name attirbute) having the value "Automatic Language Swtiching". On the other hand, the item element 5131b indicates "prtInterpreterVer" attribute (emulation version attribute) having the value "2.21.3".

The item elements 5231a and 5231b indicate that the emulation has the emulation name "Automatic Language Switching" and the version "2.21.3". Similarly, the descriptive portions 5232, 5233 and 5234 indicate respective emulation names and versions.

The conversion control part 1441 uses the XSL file "emulation.xsl" corresponding to the request identification information "emulation.html" and the XSL file "emulationMail.xsl" of the request identification information "emulationMail" to cause the XSLT processor 151 to convert the XML emulation information data 5230 into an HTML formatted emulation information page or a text formatted emulation information mail. Then, the emulation information page or the emulation information mail is sent to the terminal 20.

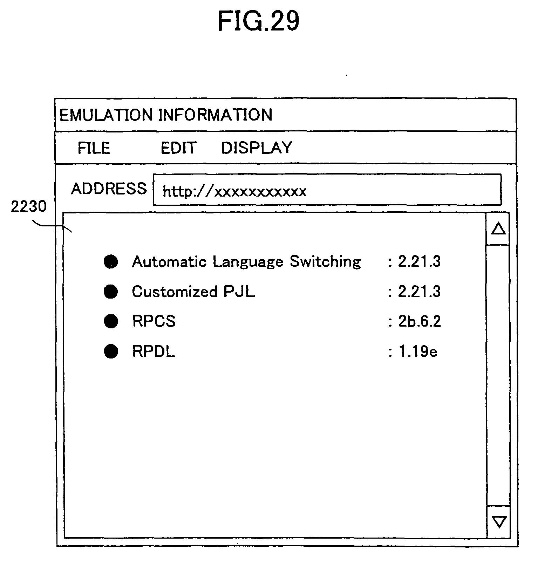

FIG. 29 shows exemplary displayed contents of the emulation information page according to the second embodiment.

Referring to FIG. 29, for each emulation, the emulation name and the version thereof are displayed in the displayed contents. The processor 151 converts the descriptive portion 5231 of the XML emulation information data 5230 in accordance with the XSL file 153 "emulation.xsl", resulting in the displayed contents.

According to the second embodiment, the format converting module 144 of the image forming apparatus 10 dynamically determines the data format of data transmitted to the terminal 20 based on request identification information. Thus, the page generating module 142 such as the function information page generating module 1422a does not have to know the data format of data including requested static information regarding the image forming apparatus 10.

Specifically, it is sufficient that the function information page generating module 1422a or the like can perform only an process to obtain the static information independent of data formats required by protocols and the terminal 20. Accordingly, even if the image forming apparatus 10 and the terminal 20 communicate to each other in accordance with HTTP, an e-mail or other protocols, the single page generating module 142 can be used and it is unnecessary to provide a plurality of separate page generating modules 142 corresponding to individual protocols or data formats required by the terminal 20 to the image forming apparatus 10.

In addition, the format converting module 144 can be used in common regardless of types of protocols and page generating modules 142. Thus, the image forming apparatus 10 does not have to prepare for various data conversion processes corresponding to the individual page generating modules 142.

Thus, according to the second embodiment, it is possible to improve efficiency of developments compared to a case where a plurality of the page generating modules 142 are provided corresponding to individual protocols. At the same time, it is possible to reduce loads on memory devices of the image forming apparatus 10.

In the above discussion, the format converting module 144 uses the serializer 150 and the XSLT processor 151 to convert language dependant data into XML formatted data and XSLT formatted data, respectively. However, the image forming apparatus 10 according to the present invention is not limited to the conversion. For example, a template file different from the XSL file 153 may be used to generate a Web page and text data from language dependant data directly.

A third embodiment of the present invention is described in detail below. In the third embodiment, the image forming apparatus 10 provides the terminal 20 with means for setting predetermined information to the image forming apparatus 10. In addition, a predetermined attribute of the image forming apparatus 10 is set based on a request from the terminal 20, and then the image forming apparatus 10 provides the terminal 20 with information regarding the attribute setting result.

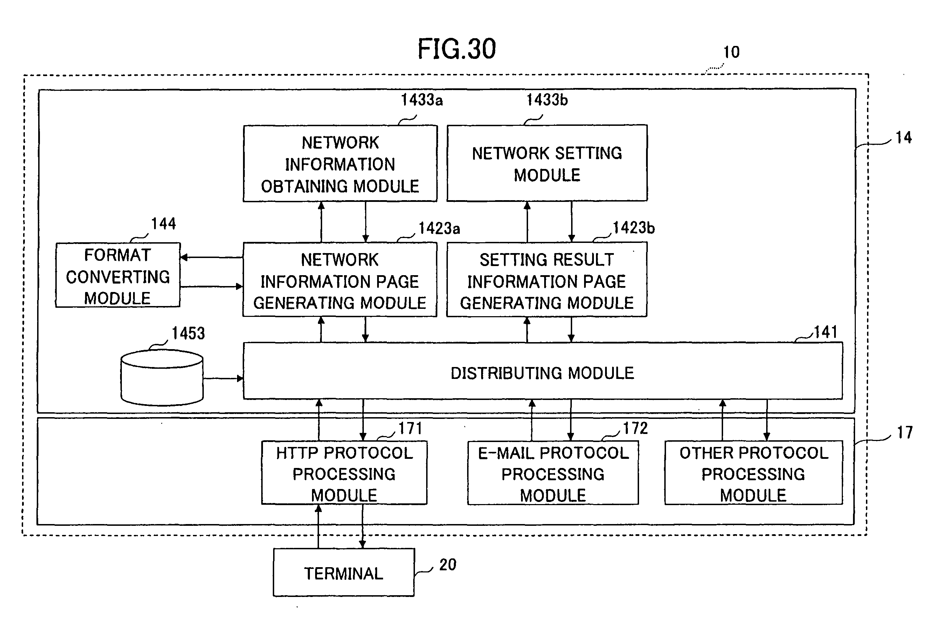

FIG. 30 shows an exemplary functional structure of an information providing application according to the third embodiment. In FIG. 30, the same components as those in FIG. 4 are referred to as the same reference numerals and the description thereof is omitted.

Referring to FIG. 30, the image forming apparatus 10 according to the third embodiment includes a network information page generating module 1423a and a setting result information page generating module 1423b.

The network information page generating module 1423a is the page generating module 142 to provide attributes regarding network communication of the image forming apparatus 10 (hereinafter which is referred to as "network information"). The setting result information page generating module 1423b is the page generating module 142 to set network information and provide a Web page for displaying the setting result (hereinafter which is referred to as a "setting result information page".

In addition, the image forming apparatus 10 includes a network information obtaining module 1433a and network setting module 1433b as instances of the information obtaining module 143. As mentioned above with respect to the information obtaining module 143, the network information obtaining module 1433a and the network setting module 1433b are called in common regardless of protocol types of communication to the terminal 20.

The network information obtaining module 1433a is the information obtaining module 143 to obtain network information. The network setting module 1433b is the information obtaining module 143 to set network information. The network setting module 1433b differs from other information obtaining module 143 in that the network setting module 1433b is used to not obtain information but set information. However, since the network setting module 1433b corresponds to the information obtaining module 143 in that the network setting module 1433b serves for the page generating module 142, the network setting module 1433b is handled as one the information obtaining modules 143 in the following description.

An exemplary operation of the image forming apparatus 10 shown in FIG. 30 is described.

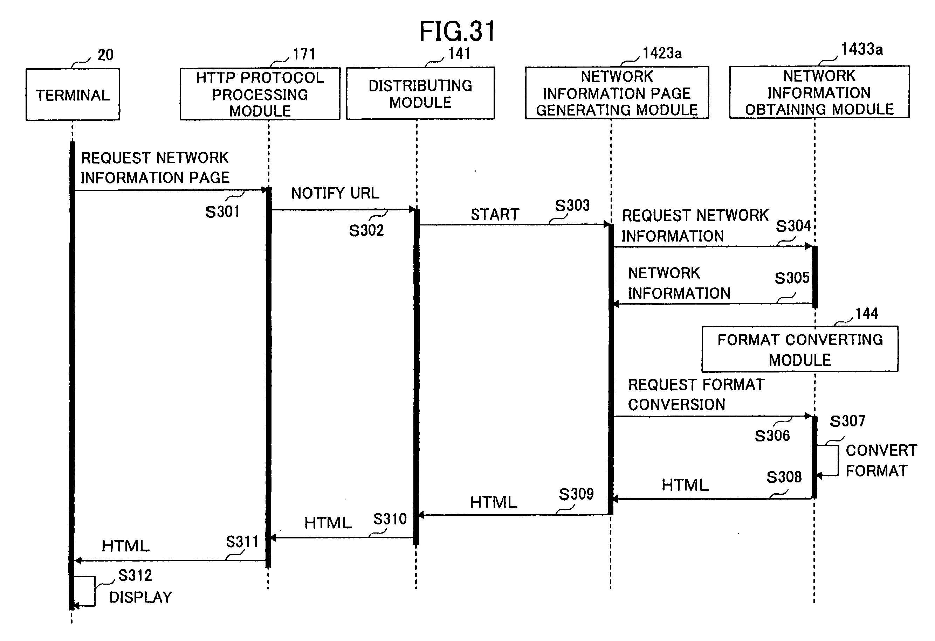

FIG. 31 is a sequence diagram to explain an operational procedure of the image forming apparatus 10 according to the third embodiment in a case where the image forming apparatus 10 communicates to the terminal 20 in accordance with HTTP.

Referring to FIG. 31, when a user of the terminal 20 inputs the URL "http://xxx/xxx/xxx/getNetwork.html" for a Web page to view network information (hereinafter which is referred to as a "network information page") regarding the image forming apparatus 10 into a Web browser of the terminal 20, the terminal 20 sends to the image forming apparatus 10 an HTTP request for the network information page at step S301.

At step S302, in response to receipt of the HTTP request from the terminal 20, the HTTP protocol processing module 171 of the image forming apparatus 10 informs the distributing module 141 of request identification information to identify a request for the URL "getNetwork.html" of the network information page in the HTTP request.

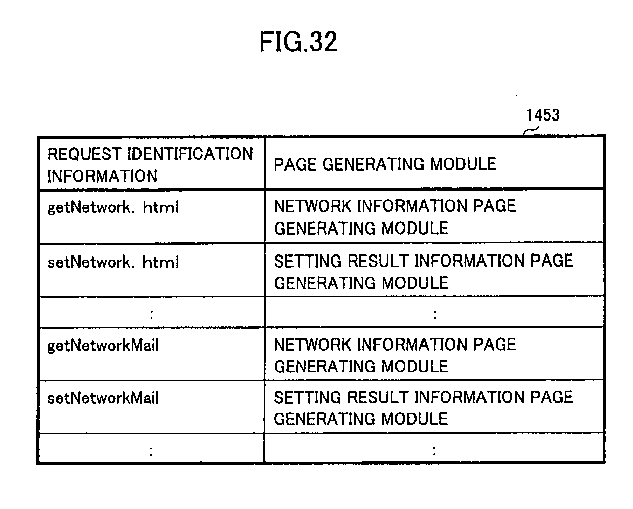

At step S303, in response to receipt of the request identification information from the HTTP protocol processing module 171, the distributing module 141 searches the corresponding page generating module table 1453 shown in FIG. 32 for a page generating module 142 corresponding to the URL "getNetwork.html", and then calls the detected page generating module 142.

FIG. 32 shows exemplary contents of the corresponding page generating module table 1453 according to the third embodiment.

Referring to FIG. 32, the corresponding page generating module table 1453 indicates that the page generating module 142 corresponding to the URL "getNetwork.html" is the network information page generating module 1423a. Accordingly, the distributing module 141 calls the network information page generating module 1423a. When the distributing module 141 calls the network information page generating module 1423a, the distributing module 141 delivers the URL "getNetwork.html" as input information to the network information page generating module 1423a.

At step S304, the network information page generating module 1423a calls the network information obtaining module 1433a to obtain the network information of the image forming apparatus 10.

At step S305, in response to the call from the network information page generating module 1423a, the network information obtaining module 1433a returns the network information to the network information page generating module 1423a. It is noted that the network information at this time point depends on the data type of a program language implementing the network information page generating module 1423a. Hereinafter such program language dependant network information is referred to as "language dependant network information data".

At step S306, the network information page generating module 1423a uses the URL "getNetwork.html" and the language dependant network information data obtained from the network information obtaining module 1433a as arguments to call the format converting module 144.

At step S307, the conversion control part 144 of the format converting module 144 converts the data format of the language dependant network information data into a data format requested by the terminal 20 in accordance with the operation described with respect to FIG. 6.

Specifically, the conversion control part 1441 calls the serializer 150 and supplies the language dependant network information data to the serializer 150 as input information (S1 in FIG. 6). The serializer 150 converts the language dependant network information data into first DOM format and then XML format, and supplies the XML formatted network information (hereinafter which is referred to as "XML network information data") to the conversion control part 1441 (S2 in FIG. 6).

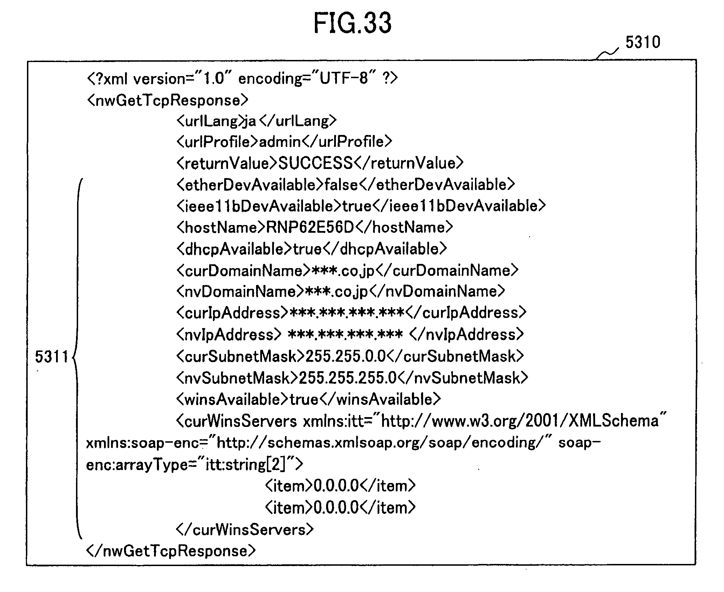

FIG. 33 shows exemplary XML network information data according to the third embodiment.

Referring to FIG. 33, XML network information data 5310 includes a descriptive portion 5310 in which attributes configuring network information are listed. Each attribute value is enclosed with tags to identify the respective attribute. For example, an element enclosed with the tags <hostName> and </hostName>, that is, the upper third element in the descriptive portion 5311, indicates the host name of the image forming apparatus 10. Similarly, other individual elements indicate respective attributes of the network information.

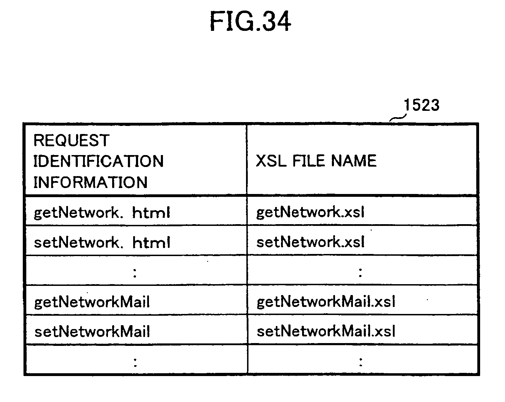

After obtaining the XML network information data 5310, the conversion control part 1441 identifies the name of an XSL file for XSLT conversion with reference to the corresponding XSL table 1523 as illustrated in FIG. 34.

FIG. 34 shows exemplary contents of the corresponding XSL table 1523 according to the third embodiment.

Referring to FIG. 34, the conversion control part 1441 searches the corresponding XSL table 1523 by using the URL "getNetwork.html", which is received as the request identification information, as a search key, and detects the XSL file name "getNetwork.xsl" registered in the column "XSL file name" of the corresponding record (S3 in FIG. 6). The conversion control part 1441 supplies the detected XSL file name "getNetwork.xsl" and the XML function information data 5310 to the XSLT processor 151, and requests the XSLT processor 151 to convert the XML network information data 5310 (S4 in FIG. 6). In accordance with the definition (conversion rule) of the XSL file 153 having the file name "getNetwork.xsl", the XSLT processor 151 XSLT-converts the XML network information data 5310, and supplies the converted data (hereinafter which is referred to as "request format network information data") to the conversion control part 1441.

It is noted that the XSL file "getNetwork.xsl" is defined to generate HTML data in this embodiment. Thus, the request format network information data are generated as HTML data. In other words, the request format network information data are a network information page.

As mentioned above, the format converting module 144 can convert the language dependant network information data into a network information page.

Referring back to FIG. 31, at step S308, the format converting module 144 supplies the generated network information page to the network information page generating module 1423a.

At step S309, in response to receipt of the network information page from the format converting module 144, the network information page generating module 1423a directly forwards the network information page to the distributing module 141 that called the network information page generating module 1423a.

At step S310, the distributing module 141, in turn, forwards the network information page to the HTTP protocol processing module 171 that called the distributing module 141.

At step S311, the HTTP protocol processing module 171 sends the network information page to the terminal 20 as an HTTP response.

At step S312, in response to receipt of the network information page from the HTTP protocol processing module 171, the terminal 20 displays the network information page on the Web browser thereof.

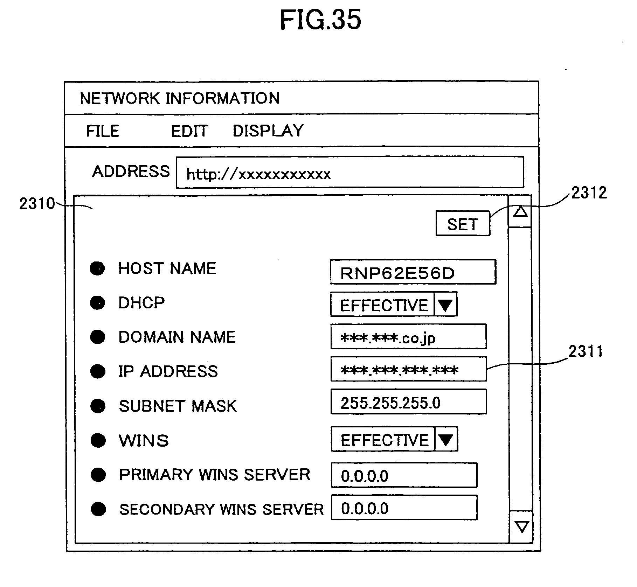

FIG. 35 shows exemplary displayed contents of the network information page according to the third embodiment.

Referring to FIG. 35, network attributes of the image forming apparatus 10 are listed in the network information page 2310. Starting from the upper of the list, "host name", "DHCP", "domain name", "IP address", "subnet mask", "WINS", "primary WINS server" and "secondary WINS server" are presented in the order. The displayed contents are obtained based on a result of conversion in which the XSLT processor 151 converts the descriptive portion 5310 in the XML network information data 5310 shown in FIG. 33 in accordance with the XSL file 153 "getNetwork.xsl". The user of the terminal 20 can check the network information of the image forming apparatus 10 by viewing the network information page.

In addition, individual attribute values can be edited in the network information page 2310. Specifically, the user can supply attribute values for the host name, the DHCP settings, the domain name and so on in the network information page 2310. In the following, an exemplary operation to change an IP address value is described.

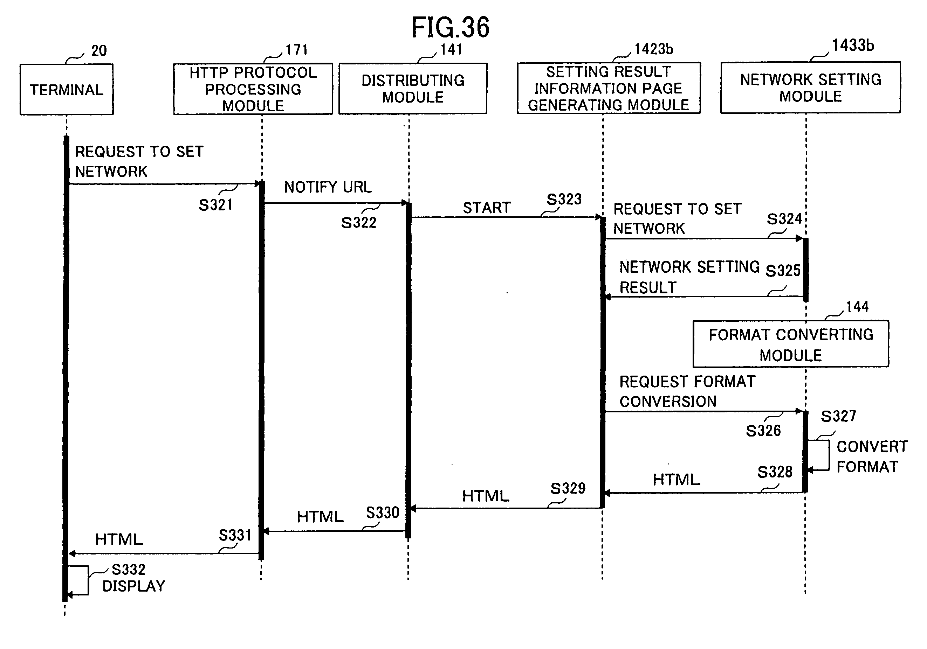

FIG. 36 is a sequence diagram of an exemplary operation of the image forming apparatus 10 to set network information via a Web browser.

Referring to FIG. 36, when a user of the terminal 20 inputs a new IP address in an IP address input area 2311 of the network information page 2310 and clicks on a setting button 2312, the terminal 20 sends to the image forming apparatus 10 an HTTP request including the URL "http://xxx/xxx/xxx/setNetwork.html" based on a link set for the setting button 2312. It is noted that such an HTTP request includes the input IP address and other displayed attribute values (hereinafter which are network attribute values) as optional information items at step S321.

At step S322, in response to receipt of the HTTP request from the terminal 20, the HTTP protocol processing module 171 of the image forming apparatus 10 informs the distributing module 141 of the URL "setNetwork.html" of the network information page in the HTTP request as request identification information and and the network attribute values as the optional information.

At step S323, in response to receipt of the request identification information and the network attribute values from the HTTP protocol processing module 171, the distributing module 141 searches the corresponding page generating module table 1453 shown in FIG. 32 for a page generating module 142 corresponding to the URL "gsetNetwork.html", and then calls the detected page generating module 142. As shown in FIG. 32, the corresponding page generating module table 1453 indicates that the page generating module 142 corresponding to the URL "setNetwork.html" is the setting result information page generating module 1423b. Accordingly, the distributing module 141 calls the setting result information page generating module 1423b. When the distributing module 141 calls the setting result information page generating module 1423b, the distributing module 141 delivers the URL "setNetwork.html" and the network attribute values as input information to the setting result information page generating module 1423b.

At step S324, the setting result information page generating module 1423b calls the network setting module 1433b by supplying the network attribute values as arguments thereto to update attribute values of the network information of the image forming apparatus 10. Specifically, for example, if the network setting module 1433b is implemented by C language and a function "setNetwork(char *hostname, bool dhcp, char *domainName, ... ) is used to the function to set the network attribute values, the values "RNP62E56D", "true", "***.***.co.jp" and so on are provided to the first argument, the second argument, the third argument and so on, respectively, of the function setNetwork and then the setNetwork function is called.

At step S325, in response to the call from the setting result information page generating module 1423b, the network setting module 1433b (setNetwork function) sets the received network attribute values to the image forming apparatus 10, and returns the setting result information to the setting result information page generating module 1423b. It is noted that the setting result information at this time point is the information to indicate whether or not the network attribute values have been successfully set, or what factor results in setting failure if the network attribute values have not been successfully set.

It is noted that the setting result information at this time point depends on the data type of a program language implementing the setting result information page generating module 1423b. Hereinafter such program language dependant setting result information is referred to as "language dependant setting result information data".

At step S326, the setting result information page generating module 1423b uses the URL "setNetwork.html" and the language dependant setting result information data obtained from the network setting module 1433a as arguments to call the format converting module 144.

At step S327, the conversion control part 144 of the format converting module 144 converts the data format of the language dependant setting result information data into a data format requested by the terminal 20 in accordance with the operation described with respect to FIG. 6.

Specifically, the conversion control part 1441 calls the serializer 150 and supplies the language dependant setting result information data to the serializer 150 as input information (S1 in FIG. 6). The serializer 150 converts the language dependant setting result information data into first DOM format and then XML format, and supplies the XML formatted setting result information (hereinafter which is referred to as "XML setting result information data") to the conversion control part 1441 (S2 in FIG. 6).

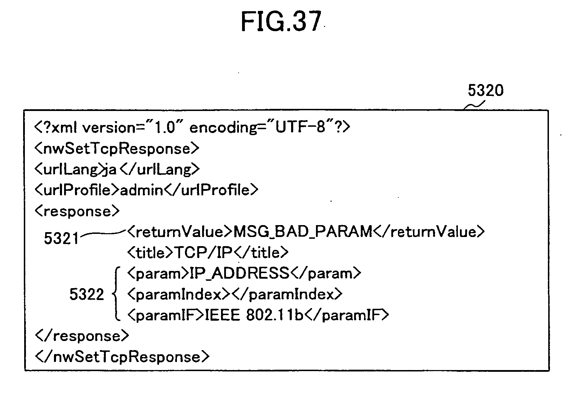

FIG. 37 shows exemplary XML setting result information data 5320 according to the third embodiment.

Referring to FIG. 37, the XML setting result information data 5320 includes a descriptive portion 5321 for the category of the setting result information. As shown in FIG. 37, the setting result information shows that the setting result information is classified into the category "MSG_BAD_PARAM" indicative of parameter trouble. The descriptive portion 5322. indicates detailed information regarding the category "MSG_BAD_PARAM". For example, since "IP_ADDRESS" is enclosed with tags <param> and </param>, it can be observed that the trouble "MSG_BAD_PARAM" is caused due to the IP address value.

After obtaining the XML setting result information data 5320, the conversion control part 1441 searches the corresponding XSL table 1523 by using the URL "setNetwork.html", which is received as the request identification information, as a search key, and detects the XSL file name "setNetwork.xsl" registered in the column "XSL file name" of the corresponding record (S3 in FIG. 6). The conversion control part 1441 supplies the detected XSL file name "setNetwork.xsl" and the XML setting result information data 5320 to the XSLT processor 151, and requests the XSLT processor 151 to convert the XML setting result information data 5320 (S4 in FIG. 6). In accordance with the definition (conversion rule) of the XSL file 153 having the file name "gstNetwork.xsl", the XSLT processor 151 XSLT-converts the XML setting result information data 5320, and supplies the converted data (hereinafter which is referred to as "request format setting result information data") to the conversion control part 1441.

It is noted that the XSL file "setNetwork.xsl" is defined to generate HTML data in this embodiment. Thus, the request format setting result information data are generated as HTML data. In other words, the request format setting result information data are a setting result information page.

As mentioned above, the format converting module 144 can convert the language dependant setting result information data into a setting result information page.

Referring back to FIG. 36, at step S328, the format converting module 144 supplies the generated setting result information page to the setting result information page generating module 1423b.

At step S329, in response to receipt of the setting result information page from the format converting module 144, the setting result information page generating module 1423b directly forwards the network information page to the distributing module 141 that called the setting result information page generating module 1423b.

At step S330, the distributing module 141, in turn, forwards the setting result information page to the HTTP protocol processing module 171 that called the distributing module 141.

At step S331, the HTTP protocol processing module 171 sends the setting result information page to the terminal 20 as an HTTP response.

At step S332, in response to receipt of the setting result information page from the HTTP protocol processing module 171, the terminal 20 displays the setting result information page on the Web browser thereof.

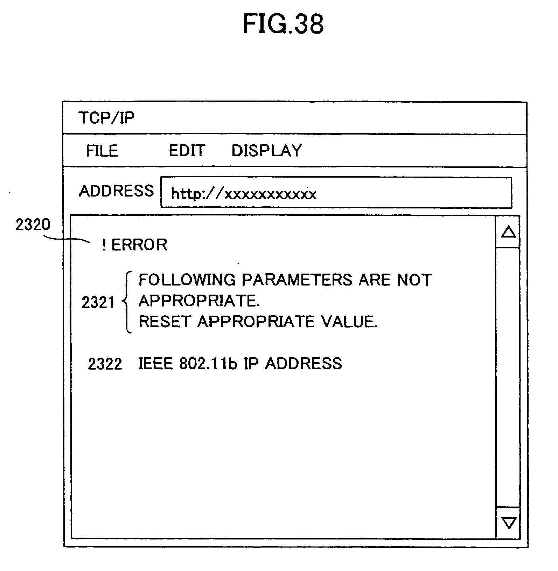

FIG. 38 shows exemplary displayed contents of the setting result information page according to the third embodiment.

Referring to FIG. 38, the setting result information page 2320 indicates that there is a malfunction in the network configuration. After the XSLT processor 151 converts the descriptive portions 5321 and 5322 of the XML setting result information data 5320 shown in FIG. 37 in accordance with the XSL file 153 "setNetwork.xsl", the respective converted results are displayed on descriptive portion 2321 and 2322 in the setting result information page 2320. The user of the terminal 20 can check the setting result information of the image forming apparatus 10 by viewing the setting result information page.

An exemplary operation of the image forming apparatus 10 according to.the third embodiment in a case where the image forming apparatus 10 receives a network information transmission request via an e-mail.

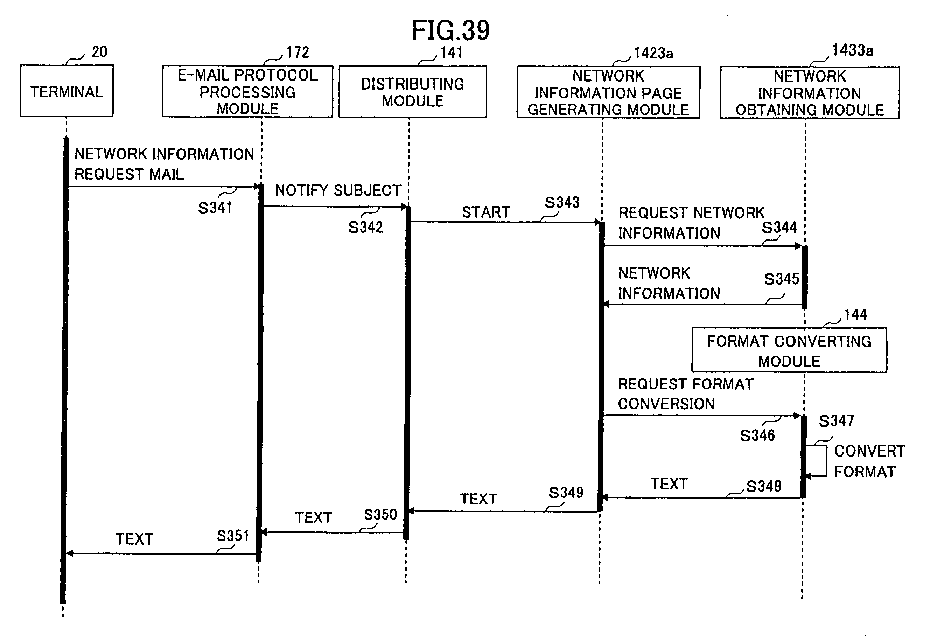

FIG. 39 is a sequence diagram to explain an operational procedure of the image forming apparatus 10 according to the third embodiment in the case where the image forming apparatus 10 communicates to the terminal 20 via an e-mail. The process flow of the image forming apparatus 10 shown in FIG. 39 is basically similar to that of the image forming apparatus 10 shown in FIG. 31. Thus, the following description is focused on operations different between the two cases.

Referring to FIG. 39, when a user of the terminal 20 creates an e-mail that has a destination address for the image forming apparatus 10 and designates the string "getNetworkMail" corresponding to request identification information in the subject field or the body thereof, which is referred to as an "network information request mail", the terminal 20 sends the network information request mail to the image forming apparatus 10 at step S341.

At step S342, in response to receipt of the network information request mail from the terminal 20, the e-mail protocol processing module 172 of the image forming apparatus 10 sends to the distributing module 141 the string "getNetworkMail" in the subject field or the body of the function information request mail as request identification information.

In the subsequent operation, the image forming apparatus 10 performs the same process as that illustrated in FIG. 31 except that the request identification information is for "getNetworkMail".

At step S343, the distributing module 141 of the image forming apparatus 10 searches the corresponding page generating module table 1453 for a page generating module 142 corresponding to "getNetworkMail". Since the corresponding page generating module table 1453 indicates that the corresponding page generating module 142 is the network information page generating module 1423a, the distributing module 141 calls the network information page generating module 1423a.

After step S344 and S345, the network information page generating module 1423a performs the same process as that illustrated in FIG. 31 to obtain network information (language dependant network information data) from the network information obtaining module 1433a.

At step S346, the network information page generating module 1423a requests the format converting module 144 to convert the language dependant network information data.

At step S347, the format converting module 144 performs the same process as that illustrated in FIG. 6 to convert the language dependant network information data. Specifically, the conversion control part 1441 of the format converting module 144 converts the language dependant network information data into XML network information data 5310 (S1 and S2 in FIG. 6). In addition, the conversion control part 1441 detects the file name of an XSL file 153 corresponding to the request identification information from the corresponding XSL table 152 (S3 in FIG. 6). Since the corresponding XSL table 1522 indicates that the corresponding XSL file name "getNetworkMail" is "getNetworkMail.xsl", the conversion control part 1441 supplies the file name "getNetworkMail.xsl" and the XML network information data 5310 to the XSL processor 151, and requests the XSLT processor 151 to convert the XML network information data 5310 (S4 in FIG. 6).

In accordance with the definition of the XSL file corresponding to the file name "getNetworkMail.xsl", the XSLT processor 151 XSLT-converts the XML network information data 5310, and supplies to the conversion control part 1441 the converted request format network information data (S5 in FIG. 6).

In this embodiment, since the XSL file "getNetworkMail.xsl" is defined to create text data, the request format network information data are generated as text data.

At steps S348 through S350, the text data are sequentially supplied to respective calling units as in steps S308 through S310 in FIG. 31.

At step S351, the e-mail protocol processing module 172 sends the request format network information data (hereinafter which is referred to as a "network information mail") to the terminal 20. The user of the terminal 20 can check network information on the image forming apparatus 10 by viewing the received network information mail.

In addition, network information of the image forming apparatus 10 may be set from the terminal 20 by using an e-mail.

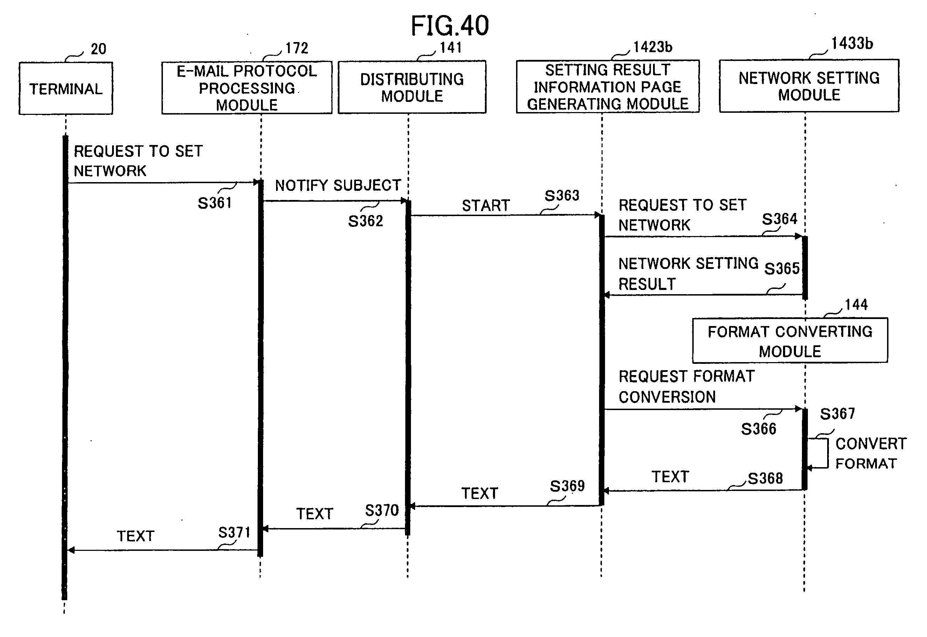

FIG. 40 is a sequence diagram of an exemplary operation of the image forming apparatus 10 to set a network via an e-mail.

Referring to FIG. 40, a user of the terminal 20 creates an e-mail that has a destination address for the image forming apparatus 10 and designates the string "setNetworkMail" in the subject field thereof (hereinafter which is referred to as a "network setting request mail", and instructs the terminal 20 to send the created network setting request mail. In response to the user's manipulation, the terminal 20 sends the network setting request mail to the image forming apparatus 10 at step S361.

It is noted that the network attribute values may be written in the body of the network setting request mail. For example, for each attribute, one line "(attribute identifier string):(attribute value)" may be inserted. Here, if an IP address identifier string is prescribed as "IP_ADD", one line "IP_ADD: ***.***.***.***" may be inserted in the body of the network setting request mail.

If a client application (hereinafter which is referred to as a "network setting application") for displaying a screen (hereinafter which is referred to as a "setting screen") for setting a network, which has the similar interface to the network information page 2310 shown in FIG. 35, sends the network setting request mail, it is possible to reduce burdens on the user. Specifically, the setting screen can be displayed by executing the network setting application in the terminal 20. When the user inputs a network attribute value and pushes a setting button on the setting screen, the network setting application automatically creates a network setting request mail having the same format as the above-mentioned format "(attribute identifier string): (attribute value)" based on the input network attribute value, and sends the created network setting request mail to the image forming apparatus 10. In such a case, the user does not have to know individual attribute identifier strings such as "IP_ADD". Also, it is unnecessary to create an e-mail having a predetermined format.

In response to receipt of the network setting request mail from the terminal 20, the image forming apparatus 10 performs the same process as that illustrated in FIG. 36 by using the string "setNetworkMail" as request identification information.

Specifically, the distributing module 141 of the image forming apparatus 10 calls the setting result information page generating module 1423b (ref. FIG. 32) corresponding to the request identification information "setNetworkMail" at step S362. The called setting result information page generating module 1423b uses the network setting module 1433b to set network information, and receives a setting result (hereinafter which is referred to as "language dependant setting result information data") from the network setting module at step S365. Then, the setting result information page generating module 1423b requests the format converting module 144 to convert the language dependant setting result information data into text data (network setting result mail) at step S366.

The conversion control part 1441 of the format converting module 144 uses the serializer 150 to convert the language dependant setting result information data into XML formatted data (XML setting result information data) (S1 and S2 in FIG. 6).

The conversion control part 1441 uses the XSL file "setNetworkMail.xsl" corresponding to the request identification information "setNetworkMail" (ref. FIG. 34) to cause the XSLT processor 151 to convert the XML system information data 5320 into a text formatted network setting result mail (S4 and S5 in FIG. 6). The network setting result mail is sent to the terminal 20 (S368 through S371 in FIG. 40). The user can check the network setting result for the image forming apparatus 10 by viewing the network setting result mail.

According to the third embodiment, since the format converting module 144 of the image forming apparatus 10 dynamically determines the data format of data transmitted to the terminal 20 based on request identification information, the page generating module 142 such as the network information page generating module 1423a does not have to know the data format of information requested by the terminal 20 or information delivered to the terminal 20.

Thus, it is sufficient that only a process to obtain network information independent of data formats required by protocols and the terminal 20 may be provided to the network information page generating module 1423a. Also, it is sufficient that only a process to set network information independent of data formats required by protocols and the terminal 20 may be provided to the setting result information page generating module 1423b.

As a result, even if the image forming apparatus 10 communicates to the terminal 20 in accordance with HTTP protocol, e-mail protocol or other communication protocol, it is possible to use the common network information page generating module 1423a or the common setting result information page generating module 1423b. Thus, it is unnecessary to prepare for a plurality of page generating modules 142 for data formats required by individual protocols and the terminal 20.

In addition, since the format converting module 144 can be used in common regardless of protocol types and the individual page generating modules, it is unnecessary to prepare for various data conversion processes for the individual page generating modules 142.

Thus, according to the third embodiment, it is possible to improve efficiency of developments compared to a case where a plurality of the page generating modules 142 are provided corresponding to individual protocols. At the same time, it is possible to reduce loads on memory devices of the image forming apparatus 10.

In the above discussion, the format converting module 144 uses the serializer 150 and the XSLT processor 151 to convert language dependant data into XML formatted data and XSLT formatted data, respectively. However, the image forming apparatus 10 according to the present invention is not limited to the conversion. For example, a template file different from the XSL file 153 may be used to generate a Web page and text data from language dependant data directly.

As mentioned above, the image forming apparatus 10 according to the present invention is described with respect to the three embodiments. In the first embodiment, the image forming apparatus 10 can provide dynamic information regarding the image forming apparatus 10 to the terminal 20. In the second embodiment, the image forming apparatus 10 can provide static information regarding the image forming apparatus 10 to the terminal 20. In the third embodiment, the image forming apparatus 10 can provide means for setting information to the image forming apparatus 10. These embodiments are separated for simplifying explanation and are not exclusive to each other. In other words, all functions of these embodiments may be collectively incorporated into the single image forming apparatus 10.

Also, information items that the image forming apparatus 10 can provide are not limited to the above-mentioned information items. By providing a page generating module 142 for each function and defining the corresponding XSL file 153, it is possible to easily provide a new information item. For example, the image forming apparatus according to the present invention can provide various types of information such as list information of document data stored in the image forming apparatus 10, an address book of e-mail addresses possessed by the image forming apparatus 10 (The image forming apparatus 10 has an address book used to send document data via e-mails.), a history of jobs of the image forming apparatus 10, and image data stored in a hard disk (not illustrated) of the image forming apparatus 10. Also, although network information regarding the image forming apparatus 10 can be set in the above-mentioned embodiments, the image forming apparatus 10 may be configured to set other functions of the image forming apparatus 10 from the terminal 20 via a Web browser or e-mails.

In addition, devices to which the present invention is applicable are not limited to image forming apparatuses. The present invention can be applied to not only information processing apparatuses such as ordinary computers but also so-called "electrical household appliances", such as digital cameras and cellar phones, that are imposed on severe constraints with respect to memory capacity thereof as in the image forming apparatuses according to the present invention.

The present invention is not limited to the specifically disclosed embodiments, and variations and modifications may be made without departing from the scope of the present invention as defined in the appended claims.

## Claims

1. An information providing apparatus (10) for transmitting predefined information to a terminal, in response to a request transmitted in accordance with one of different protocols from the terminal (20) via a network, comprising:
a plurality of protocol processing modules (171, 172) for generating request identification information from a request received from a terminal (20) ;
a plurality of attribute setting parts (1423a, 1423b, 1433a, 1433b) for setting predefined different attributes of the information providing apparatus corresponding to the request transmitted in accordance with the protocol;
a distributing part (141) for selectively calming an attribute setting part (1423a, 1423b, 1433a, 1433b) based on requests identification information received from a protocol processing module (171, 172); and
an information converting part (144) for converting setting result information on the predefined different attributes set by the plurality of attribute setting parts (1423a, 1423b, 1433a, 1433b) as the predefined information into data corresponding to the respective protocol in accordance with a conversion rule defined for request identification information included in the request to identify the request, wherein the information converting part (144) is adapted to be called in common regardless of types of the different protocols and the attribute setting parts.

2. The information providing apparatus as claimed in claim 1, **characterized in that** each attributes setting part is adapted to be called in common regardless of types of the different protocols.

3. The information providing apparatus as claimed in claim 2, further including:
a terminal reques= determining part (141) for determining an attribute setting part corresponding to a request of the terminal from the attribute setting parts based on the request identification information.

4. The information providing apparatus as claimed in claim 1, 2 or 3, **characterized in that** the information converting part is adapted to convert the predefined information into the data corresponding to the protocol in accordance with a conversion rule of a format definition file (153) for prescribing a data format of the data and the conversion rule is defined for each piece of request identification information.

5. The information providing apparatus as claimed in one of claim 1 through 4, **characterized in that** the information providing apparatus is an image forming apparatus (10).

6. The information providing apparatus as claimed in claim 5, **characterized in that** the predefined attribute is related to network communication.

7. An information providing method for an information providing apparatus transmitting predefined information to a terminal in response to a request transmitted in accordance with one of different protocols from the terminal via a network, comprising:
receiving a requests from a terminal at one of a plurality of protocol processing modules (171, 172) and generating request identification information from said request;
selectively calling an attribute setting part (1423a, 1423b, 1433a, 1433b) based on request identification information received from a protocol processing module (171, 172);
setting a predefined attribute of the information providing apparatus corresponding to the request transmitted in accordance with the protocol; and
converting, in response to call in common regardless of types of the different protocols and the setting step, setting result information on the set predefined attribute as the predefined information into data corresponding to the respective protocol in accordance with a conversion rule defined for request identification information included in the request to identify the request.

8. An information providing systen (1) ,
**characterized by**:
a terminal (20); and
an information providing apparatus (10) in accordance with any one of claims 1 to 6.

9. A carrier medium carrying computer readable code for controlling a computing apparatus to carry out all the method steps of claim 7 when it is run on said computing apparatus.

## Patentansprüche

1. Informationsbereitstellungsvorrichtung (10) zum Übertragen von vordefinierter Information an ein Endgerät als Antwort auf eine Anforderung, die gemäß einem von verschiedenen Protokollen vom Endgerät (20) über ein Netz übertragen wird, Folgendes umfassend:
eine Vielzahl von Protokollverarbeitungsmodulen (171, 172) zum Erzeugen von Anforderungsidentifikationsinformation aus einer von einem Endgerät (20) empfangenen Anforderung;
eine Vielzahl von Attributeinstellungsteilen (1423a, 1423b, 1433a, 1433b) zum Einstellen von vordefinierter verschiedenen Attributen der Informationsbereitstellungsvorrichtung entsprechend der gemäß dem Protokoll übertragenen Anforderung;
einen Verteilungsteil (141) zum selektiven Aufrufen eines Attributeinstellungsteils (1423a, 1423b, 1433a, 1433b) auf der Basis von Anforderungsidentifikationsinformation, die von einem Protokollverarbeitungsmodul (171, 172) empfangen wird; und
einen Informationsumwandlungsteil (144) zum Umwandeln von Einstellungsergebnisinformation über die vordefinierten verschiedenen Attribute, die von der Vielzahl von Attributeiststellungsteilen (1423a, 1423b, 1433a, 1433b) als die vordefinierte Information in Daten eingestellt werden entsprechend dem jeweiligen Protokoll gemäß einer Umwandlungsregel, die für Anforderungsidentifikationsinformation definiert ist, die in der Anforderung enthalten ist, die Anforderung zu identifizieren, worin der Informationsumwandlungsteil (144) dazu angepasst ist, gemeinsam aufgerufen zu werden, ungeachtet der Typen der verschiedenen Protokolle und der Attributeinstellungsteile.

2. Informationsbereitstellungsvorrichtung nach Anspruch 1, **dadurch gekennzeichnet, dass** jeder Attributeinstellungsteil dazu angepasst ist, gemeinsam aufgerufen zu werden, ungeachtet der Typen der verschiedenen Protokolle.

3. Informationsbereitstellungsvorrichtung nach Anspruch 2, außerdem Folgendes enthaltend:
einen Endgerätanforderungs-Bestimmungsteil (141) zum Bestimmen eines Attributeinstellungsteils entsprechend einer Anforderung des Endgeräts von den Attributeinstellungsteilen auf der Basis der Anforderungsidentifikationsinformation.

4. Informationsbereitstellungsvorrichtung nach Anspruch 1, 2 oder 3, **dadurch gekennzeichnet, dass** der Informationsumwandlungsteil dazu angepasst ist, die vordefinierte Information in die Daten umzuwandeln entsprechend dem Protokoll gemäß einer Umwandlungsregel einer Formatdefinitionsdatei (153) zum Vorschreiben eines Datenformats der Daten, wobei die Umwandlungsregel für jeden Teil von Anforderungsidentifikationsinformation definiert ist.

5. Informationsbereitstellungsvorrichtung nach einem der Ansprüche 1 bis 4, **dadurch gekennzeichnet, dass** die Informationsbereitstellungsvorrichtung eine Bildgebungsvorrichtung (1C) ist.

6. Informationsbereitstellungsvorrichtung nach Anspruch 5, **dadurch gekennzeichnet, dass** das vordefinierte Attribut die Netzkommunikation betrifft.

7. Informationsbereitstellungsverfahren für eine Informationsbereitstellungsvorrichtung, die vordefinierte Information an ein Endgerät überträgt als Antwort auf eine Anforderung, die gemäß einem von verschiedenen Protokollen vom Endgerät über ein Netz übertragen wird, Folgendes umfassend:
Empfangen einer Anforderung von einem Endgerät an einem einer Vielzahl von Protokollverarbeitungsmodulen (171, 172) und Erzeugen von Anforderungsidentifikationsinformation aus der Anforderung;
selektives Aufrufen eines Attributeinstellungsteils (1423a, 1423b, 1433a, 1433b) auf der Basis von Anforderungsidentifikationsinformation, die von einem Protokollverarbeitungsmodul (171, 172) empfangen wird;
Einstellen eines vordefinierten Attributs der Informationsbereitstellungsvorrichtung entsprechend der Anforderung, die gemäß dem Protokoll übertragenen wird; und
als Antwort auf gemeinsamen Aufruf ungeachtet der Typen der verschiedenen Protokolle und des Einstellungsschritts, Umwandeln der Einstellungsergebnisinformation über das eingestellte vordefinierte Attribut als der vordefinierter Information in Daten entsprechend dem jeweiligen Protokoll gemäß einer Umwandlungsregel, die für Anforderungsidentifikationsinformation definiert ist, die in der Anforderung zum Identifizieren der Anforderung enthalten ist.

8. Informationsbereitstellungssystem (1),
gekennzeichet durch:
ein Endgerät (20); und
eine Informationsbereitstellungsvorrichtung (10) nach einem der Ansprüche 1 bis 6.

9. Trägermedium, das computerlesbaren Code zum Steuern einer Computervorrichtung trägt, um alle Verfahrensschritte von Anspruch 7 durchzuführen, wenn er auf der Computervorrichtung ausgeführt wird.

## Revendications

1. Dispositif de fourniture d'informations (10) pour transmettre des informations prédéfinies à un terminal, en réponse à une demande transmise selon l'un parmi différents protocoles à partir du terminal (20) via un réseau, comprenant :
une pluralité de modules de traitement de protocole (171, 172) pour générer des informations d'identification de demande à partir d'une demande reçue à partir d'un terminal (20) ;
une pluralité de parties de paramétrage d'attributs (1423a, 1423b, 1433a, 1433b) pour paramétrer différents attributs prédéfinis du dispositif de fourniture d'informations correspondant à la demande transmise selon le protocole ;
une partie de distribution (141) pour appeler de manière sélective une partie de paramétrage d'attributs (1423a, 1423b, 1433a, 1433b) sur la base d'informations d'identification de demande reçues à partir d'un module de traitement de protocoles (171, 172) ; et
une partie de conversion d'informations (144) pour convertir des informations de résultat de paramétrage, sur les différents attributs prédéfinis, définis par la pluralité de parties de paramétrage d'attributs (1423a, 1423b, 1433a, 1433b) en tant que les informations prédéfinies, en des données correspondant au protocole respectif, selon une règle de conversion définie pour des informations d'identification de demande incluses dans la demande visant à identifier la demande, dans laquelle la partie de conversion d'informations (144) est apte à être appelée en commun indépendamment des types des différents protocoles et des parties de paramétrage d'attributs.

2. Dispositif de fourniture d'informations selon la revendication 1, **caractérisé en ce que** chaque partie de paramétrage d'attributs est apte à être appelée en commun indépendamment des types des différents protocoles.

3. Dispositif de fourniture d'informations selon la revendication 2, comprenant en outre :
une partie de détermination de demandes de terminal (141), pour déterminer une partie de paramétrage d'attributs correspondant à une demande du terminal à partir des parties de paramétrage d'attributs, sur la base des informations d'identification de demande.

4. Dispositif de fourniture d'informations selon la revendication 1, 2 ou 3, **caractérisé en ce que** la partie de conversion d'informations est apte à convertir les informations prédéfinies en des données correspondant au protocole, selon une règle de conversion d'un fichier de définition de formats (153), en vue de prescrire un format de données des données, et **en ce que** la règle de conversion est définie pour chaque élément d'informations d'identification de demande.

5. Dispositif de fourniture d'informations selon l'une quelconque des revendications 1 à 4, **caractérisé en ce que** le dispositif de fourniture d'informations est un dispositif de formation d'images (1C).

6. Dispositif de fourniture d'informations selon la revendication 5, **caractérisé en ce que** attribut prédéfini est connexe à la communication réseau.

7. Procédé de fourniture d'informations destiné à un dispositif de fourniture d'informations transmettant des informations prédéfinies à un terminal en réponse à une demande transmise selon l'un parmi différents protocoles à partir du terminal via un réseau, comprenant les étapes ci-dessous consistant à :
recevoir une demande, en provenance d'un terminal, au niveau de l'un parmi une pluralité de modules de traitement de protocole (171, 172) et générer des informations d'identification de demande à partir de ladite demande ;
appeler de manière sélective une partie de paramétrage d'attributs (1423a, 1423b, 1433a, 1433b) sur la base d'informations d'identification de demande reçues à partir d'un module de traitement de protocoles (171, 172) ;
paramétrer un attribut prédéfini du dispositif de fourniture d'informations correspondant à la demande transmise selon le protocole : et
convertir, en réponse à un appel en commun, indépendamment des types des différents protocoles et de l'étape de paramétrage, des informations de résultat de paramétrage sur l'attribut prédéfini en tant que les informations, en des données correspondant au protocole respectif, selon une règle de conversion définie pour des informations d'identification de demande incluses dans la demande visant à identifier la demande.

8. Système de fourniture d'informations (1),
**caractérisé par** :
une terminal (20) ; et
un dispositif de fourniture d'informations (10) selon l'une quelconque des revendications 1 à 6.

9. Support de stockage transportant du code lisible par ordinateur pour amener un dispositif informatique à mettre en oeuvre l'ensemble des étapes de procédé selon la revendication 7, lorsqu'il est exécuté sur ledit dispositif informatique.
